(19) 

(11) **EP 4 810 709 A1**

(12) **EUROPEAN PATENT APPLICATION**
published in accordance with Art. 153(4) EPC

(43) Date of publication:
**23.09.2026 Bulletin 2026/39**

(21) Application number: **24912643.4**

(22) Date of filing: **20.12.2024**

(51) International Patent Classification (IPC):
***D06P 5/30*** *(2006.01)* ***B41J 2/01*** *(2006.01)*
***B41M 5/00*** *(2006.01)* ***C09D 11/38*** *(2014.01)*
***D06B 11/00*** *(2006.01)* ***D06C 23/00*** *(2006.01)*
***D06P 5/00*** *(2006.01)*

(52) Cooperative Patent Classification (CPC):
**B41J 2/01; B41M 5/00; C09D 11/38; D06B 11/00; D06C 23/00; D06P 5/00; D06P 5/30**

(86) International application number:
**PCT/JP2024/045083**

(87) International publication number:
**WO 2025/142754 (03.07.2025 Gazette 2025/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.12.2023 JP 2023218002**

(71) Applicant: **Kyocera Corporation**
**Kyoto-shi, Kyoto 612-8501 (JP)**

(72) Inventor: **EHARA, Shunta**
**Kyoto-shi, Kyoto 612-8501 (JP)**

(74) Representative: **Viering, Jentschura & Partner mbB**
**Patent- und Rechtsanwälte**
**Am Brauhaus 8**
**01099 Dresden (DE)**

(54) **TREATMENT LIQUID FOR INKJET TEXTILE PRINTING, INK SET FOR INKJET TEXTILE PRINTING, INKJET TEXTILE PRINTING METHOD, AND INKJET TEXTILE PRINTING DEVICE**

(57) A treatment liquid for inkjet textile printing contains a water-soluble cationic polymer, and ammonium formate.

FIG. 1

10
4
5
4a
4b
4c
4d
6
P
3



Processed by Luminess, 75001 PARIS (FR)

## Description

TECHNICAL FIELD

The present invention relates to a treatment liquid for inkjet textile printing, an ink set for inkjet textile printing, an inkjet textile printing method, and an inkjet textile printing apparatus.

BACKGROUND OF INVENTION

Inkjet recording-based textile printing (inkjet textile printing) has received attention as a method for forming images on fabric to, for example, readily allow high-mix low-volume production while discharging less wastewater. Inkjet textile printing may include ejecting and depositing a treatment liquid, in addition to ink, onto fabric, which is a recording medium. More specifically, a pretreatment liquid may be ejected onto a recording medium before ink is ejected. Such a treatment liquid is described in, for example, Patent Literatures 1 and 2. Patent Literature 1 describes a pretreatment liquid for water-based pigment textile printing that contains aqueous non-ionic polyurethane and a metal salt. The treatment liquid described in Patent Literature 1 can increase the fastness of ink that is subsequently coated, prevent the permeation of white ink, or increase the chroma of color ink. Patent Literature 2 describes a treatment liquid for textile printing that contains an organic acid with a boiling point less than or equal to 120 °C and an organic acid with a boiling point greater than or equal to 140 °C. The treatment liquid described in Patent Literature 2 can facilitate aggregation of a pigment, form a coating film while moderately permeating into fabric, and provide a printed material (printed textile) with improved balance between offset resistance, bleeding resistance, and fastness to washing.

CITATION LIST

PATENT LITERATURE

Patent Literature 1: Japanese Unexamined Patent Application Publication No. 2020-183605

Patent Literature 2: Japanese Unexamined Patent Application Publication No. 2021-152091

SUMMARY

In one aspect of the present invention, a treatment liquid for inkjet textile printing contains a water-soluble cationic polymer, and ammonium formate.

In another aspect of the present invention, a treatment liquid for inkjet textile printing contains a water-soluble cationic polymer, and an organic acid ammonium salt consisting of an organic acid having a vapor pressure less than or equal to 2 kPa at 20 °C and ammonia.

BRIEF DESCRIPTION OF THE DRAWINGS

FIG. 1 is a schematic diagram of an inkjet textile printing apparatus that uses a treatment liquid for inkjet textile printing according to one embodiment of the present disclosure, partially illustrating its structure.

FIG. 2 is a perspective view of an inkjet printer that uses the treatment liquid for inkjet textile printing according to the embodiment of the present disclosure, illustrating its overall structure.

FIG. 3 is a schematic cross-sectional view taken along line III-III in FIG. 2.

FIG. 4 is an enlarged perspective view of a carriage illustrated in FIG. 2.

DESCRIPTION OF EMBODIMENTS

One or more embodiments of the present disclosure will be described below. However, the present disclosure is not limited to such embodiments.

Treatment Liquid for Inkjet Textile Printing

In one embodiment of the present disclosure, a treatment liquid for inkjet textile printing contains a water-soluble cationic polymer and ammonium formate. In the present embodiment, the treatment liquid for inkjet textile printing is ejected and deposited, in addition to ink for inkjet textile printing, onto fabric, which is a recording medium. This causes the water-soluble cationic polymer contained in the treatment liquid for inkjet textile printing to aggregate a color material such as a pigment contained in the ink for inkjet textile printing, thus providing a printed textile with high color development. When containing an organic acid salt in addition to the water-soluble cationic polymer, the treatment liquid for inkjet textile printing can provide a printed textile with improved texture in addition to high color development. The treatment liquid for inkjet textile printing containing the ammonium formate as the organic acid salt can provide a printed textile with high color development and improved texture while reducing an odor. Note that although the treatment liquid for inkjet textile printing may be a pretreatment liquid ejected and deposited onto the fabric before ink for inkjet textile printing is deposited onto the fabric or a post-treatment liquid ejected and deposited onto the fabric after ink for inkjet textile printing is deposited onto the fabric, the treatment liquid may be a pretreatment liquid to achieve higher color development and more improved texture.

When a treatment liquid containing a metal salt (e.g., the treatment liquid described in Patent Literature 1) is used as a treatment liquid for inkjet textile printing, the treatment liquid containing a larger amount of metal salt added may deteriorate the texture of the printed textile. In contrast, when a treatment liquid containing an organic acid salt is ejected and deposited onto fabric, the treatment liquid deposited on the fabric appropriately aggregates the color material such as a pigment contained in the ink deposited on the fabric, allowing the obtained printed textile to have high color development and improved texture. However, an organic acid salt contained in such a treatment liquid may have a strong odor, and such a strong odor may be perceived in the atmosphere during inkjet textile printing. A strong odor may also be perceived in the obtained printed textile. When an organic acid with a low boiling point (e.g., an organic acid with a boiling point less than or equal to 120 °C as described in Patent Literature 2) is contained in the treatment liquid for inkjet textile printing, the organic acid is highly volatile, and a strong odor may be perceived in, for example, an atmosphere during inkjet textile printing. In one or more embodiments of the present disclosure, the treatment liquid for inkjet textile printing can reduce the above concerns and provide a printed textile with high color development and improved texture while reducing an odor.

The water-soluble cationic polymer contained in the treatment liquid for inkjet textile printing may be any water-soluble cationic polymer that can aggregate the color material contained in the ink for inkjet textile printing upon contact with the ink for inkjet textile printing. Examples of the water-soluble cationic polymer include an ammonium-containing polymer, an amine-containing polymer, polyallylamine, polyvinylamine, polyimine, polyvinylpyrrolidone, polyethylenimine, polyvinylpyridine, aminoacetalized polyvinyl alcohol, an ionene polymer, polyvinyl imidazole, polyvinyl benzylphosphonium, polyalkyl allyl ammonium, polyamidine, and polyamine sulfone. To achieve higher color development, the water-soluble cationic polymer may be, among the above examples, a quaternary ammonium-containing polymer (quaternary ammonium salt cationic polymer), a diallyldimethylammonium sulfur dioxide copolymer, a diallyldimethyl ammonium chloride acrylamide copolymer, a diallyldimethylammonium chloride polymer, a dimethylamine-ammonia-epichlorohydrin polycondensate, or a dimethylamine-ammonia-epichlorohydrin polycondensate. One of these compounds may be used alone, or two or more of these may be used in combination. The water-soluble cationic polymer may contain succinate anions to further reduce yellowing of the obtained printed textile (e.g., yellowing that can occur when the obtained printed textile is heated). In other words, the water-soluble cationic polymer may contain succinic acid as a counterion. More specifically, the water-soluble cationic polymer may form a salt with succinate anions. More specifically, at least some of the anions in the water-soluble cationic polymer may be ion-exchanged to succinate anions. When forming a salt with succinate anions, the water-soluble cationic polymer is more water-soluble. This increases the content of the water-soluble cationic polymer. An increase in the content of the water-soluble cationic polymer further facilitates aggregation of the color material such as a pigment contained in the ink for inkjet textile printing, thus providing a printed textile with higher color development and more improved texture. Thus, a printed textile with reduced yellowing, higher color development, and more improved texture can be obtained.

The water-soluble cationic polymer may have a weight-average molecular weight of, but is not limited to, 1000 to 10000 inclusive to improve ejection through inkjet heads.

Although the content of the water-soluble cationic polymer relative to the treatment liquid for inkjet textile printing is not limited, the lower limit may be 0.3 mass% or greater, specifically 0.5 mass% or greater, or more specifically 1 mass% or greater to increase the color development. The upper limit of the content of the water-soluble cationic polymer relative to the treatment liquid for inkjet textile printing may be 35 mass% or less, specifically 29.5 mass% or less, or more specifically 20 mass% or less.

As described above, the treatment liquid for inkjet textile printing contains ammonium formate. The ammonium formate may be a commercially available product that can be obtained in any manner. The lower limit of the content of the ammonium formate relative to the treatment liquid for inkjet textile printing may be 0.1 mass% or greater, specifically 5 mass% or greater, or more specifically 10 mass% or greater. The upper limit of the content of the ammonium formate relative to the treatment liquid for inkjet textile printing may be 25 mass% or less, specifically 23 mass% or less, or more

specifically 20 mass% or less. The treatment liquid for inkjet textile printing with the content of the ammonium formate within the above ranges can provide a printed textile with higher color development and more improved texture while reducing an odor.

As described above, the treatment liquid for inkjet textile printing containing ammonium formate as an organic acid salt can provide a printed textile with higher color development and more improved texture while reducing an odor, in particular, an odor from an organic acid salt.

The inventor has examined the odor perceived in the atmosphere during inkjet textile printing and the odor perceived from the obtained printed textile in more detail to find that, in inkjet textile printing using a treatment liquid for inkjet textile printing, an odor from the water-soluble cationic polymer contained in the treatment liquid for inkjet textile printing can be perceived. More specifically, when a printed textile is dried through a high-temperature treatment, a strong odor may be perceived from the dried printed textile. This odor may be caused by, for example, the water-soluble cationic polymer heated and altered in response to the printed textile being heated and a compound derived from the altered water-soluble cationic polymer. More specifically, when the water-soluble cationic polymer that is, for example, an ammonium-containing polymer, an amine-containing polymer, polyallylamine, polyvinylamine, or a quaternary ammonium salt cationic polymer undergoes a high-temperature treatment, a strong odor may be perceived from the dried printed textile due to, for example, thermal decomposition. The inventor has found that the treatment liquid for inkjet textile printing containing an organic acid ammonium salt consisting of an organic acid having a vapor pressure less than or equal to 2 kPa at 20 °C and ammonia can reduce the odor from the water-soluble cationic polymer (hereafter may also be simply referred to as an amine odor when a water-soluble cationic polymer that may alter to emit, for example, an amine odor is used). The treatment liquid for inkjet textile printing containing the organic acid ammonium salt may reduce the alteration of the water-soluble cationic polymer. More specifically, the treatment liquid for inkjet textile printing may be acidified by preferentially volatilizing a base in an early stage of drying. This may reduce the alteration of the water-soluble cationic polymer that can progress under basic conditions during high-temperature drying. Although the treatment liquid for inkjet textile printing containing an organic acid in place of the organic acid ammonium salt may also reduce the odor from the water-soluble cationic polymer (e.g., an amine odor), the treatment liquid for inkjet textile printing that is acid may corrode an inkjet textile printing apparatus (e.g., an inkjet head and a flow channel). The treatment liquid for inkjet textile printing containing the organic acid ammonium salt can also reduce such corrosion. In other words, the treatment liquid for inkjet textile printing containing the organic acid ammonium salt also achieves high material compatibility.

The treatment liquid for inkjet textile printing may contain the organic acid ammonium salt (organic acid ammonium salt consisting of an organic acid having a vapor pressure less than or equal to 2 kPa at 20 °C and ammonia). More specifically, the treatment liquid for inkjet textile printing may contain the water-soluble cationic polymer and the organic acid ammonium salt. The treatment liquid for inkjet textile printing containing the organic acid ammonium salt can reduce an odor (e.g., an amine odor) from the water-soluble cationic polymer while achieving high material compatibility. The treatment liquid for inkjet textile printing may contain the ammonium formate, and further contain the organic acid ammonium salt. More specifically, the treatment liquid for inkjet textile printing may contain the water-soluble cationic polymer, the ammonium formate, and the organic acid ammonium salt. The treatment liquid for inkjet textile printing can thus provide a printed textile with high material compatibility, higher color development, and more improved texture while reducing an odor, in particular, an odor from an organic acid salt, as well as an odor from the water-soluble cationic polymer.

The organic acid ammonium salt may be any organic acid ammonium salt that consists of an organic acid having a vapor pressure less than or equal to 2 kPa at 20 °C and ammonia. Examples of the organic acid ammonium salt include ammonium succinate, ammonium citrate, ammonium benzoate, and ammonium acetate. Examples of the ammonium succinate include ammonium succinate and diammonium succinate. Examples of the ammonium citrate include ammonium citrate, diammonium hydrogen citrate, and triammonium citrate. One of these organic acid ammonium salts may be used alone, or two or more of these may be used in combination. The organic acid in the organic acid ammonium salt may be any organic acid that has a vapor pressure less than or equal to 2 kPa at 20 °C, and may be an organic acid that does not substantially evaporate, or more specifically, an organic acid that is noticeably less evaporative at 20 °C. In other words, the vapor pressure may be substantially 0 kPa. The organic acid may have a vapor pressure of 0 to 2 kPa at 20 °C. Examples of the organic acid include organic acids having vapor pressures less than or equal to 2 kPa at 20°C in the International Chemical Safety Cards (ICSCs). The value of the vapor pressure may be obtained with a common vapor pressure measurement method. For example, the value of the vapor pressure may be obtained with a static method or measured with a transpiration method when the value cannot be measured with the static method (e.g., 100 kPa or less).

Although the content of the organic acid ammonium salt relative to the water-soluble cationic polymer is not limited, the lower limit may be 10 mass% or greater, or specifically 100 mass% or greater. The upper limit of the content of the organic acid ammonium salt relative to the water-soluble cationic polymer may be 300 mass% or less, or specifically 200 mass% or less. The lower limit of the content of the organic acid ammonium salt relative to the treatment liquid for inkjet textile printing may be 0.5 mass% or greater, or specifically 3 mass% or greater. The upper limit of the content of the organic acid ammonium salt may be 10 mass% or less, specifically 6 mass% or less, or more specifically 5 mass% or less. The treatment liquid for inkjet textile printing with the content of the organic acid ammonium salt within the above ranges can

provide a printed textile having an odor (e.g., an amine odor) from the water-soluble cationic polymer reduced more appropriately, while achieving high material compatibility.

The treatment liquid for inkjet textile printing containing ammonium formate may contain the organic acid ammonium salt, and may further contain an organic acid salt (another organic acid salt) other than ammonium formate and the organic acid ammonium salt. The other organic acid salt may be any organic acid salt, such as an organic acid ammonium salt. For water solubility, for example, the organic acid ammonium salt may be ammonium propionate, ammonium oxalate, ammonium tartrate, ammonium lactate, diammonium malonate, ammonium malate, or monoammonium L-glutamate. One of these other organic acid ammonium salts may be used alone, or two or more of these may be used in combination. Although the treatment liquid for inkjet textile printing containing ammonium formate may contain the other organic acid salt as described above, the content of the other organic acid salt may be low or the treatment liquid for inkjet textile printing may not contain the other organic acid salt to further reduce an odor. More specifically, for the content of the other organic acid salt, the content of the ammonium formate relative to a total of 100 parts by mass of the ammonium formate and the other organic acid salt may be 50 to 100 parts by mass inclusive, and may be 100 parts by mass. The content of the ammonium formate relative to a total of 100 parts by mass of the ammonium formate, the organic acid ammonium salt, and the other organic acid salt may be 50 to 100 parts by mass inclusive, and may be 100 parts by mass.

To further facilitate aggregation of the color material such as a pigment contained in the ink for inkjet textile printing and to further increase, for example, fastness to washing, the treatment liquid for inkjet textile printing may further contain a metal salt. Anions included in the metal salt may be any anions. Examples of the anions include organic acid anions such as acetic acid, lactic acid, and oxalic acid, carbonate ions, sulfate ions, nitrate ions, chloride ions, sulfide ions, silicate ions, and hydroxide ions. Examples of metal ions in the metal salt include metal ions with a valence of 2 or more such as magnesium, calcium, copper, nickel, zinc, barium, aluminum, titanium, strontium, chromium, cobalt, and iron, and monovalent metal ions such as sodium and potassium. To further facilitate aggregation, the metal ions in the metal salt may be, among the above examples, metal ions with a valence of 2 or more. In other words, the metal salt may be a polyvalent metal salt. Examples of the metal salt include calcium acetate, calcium carbonate, calcium nitrate, calcium chloride, calcium sulfate, calcium hydroxide, magnesium acetate, magnesium lactate, magnesium oxalate, magnesium sulfate, magnesium phosphate, aluminum acetate, barium sulfate, barium chloride, zinc carbonate, zinc sulfide, aluminum silicate, calcium silicate, and copper nitrate. To further facilitate aggregation, the metal salt may be, among the above examples, magnesium acetate. One of these examples of the metal salt may be used alone, or two or more of these may be used in combination. For the treatment liquid for inkjet textile printing containing the metal salt, the lower limit of the content of the metal salt relative to the treatment liquid for inkjet textile printing may be 0.1 mass% or greater, or specifically 0.3 mass% or greater. The upper limit of the content of the metal salt relative to the treatment liquid for inkjet textile printing may be 3 mass% or less, or specifically 1 mass% or less. The treatment liquid for inkjet textile printing containing the metal salt within the above ranges can appropriately increase fastness to washing. The treatment liquid for inkjet textile printing can thus provide a printed textile with high color development, improved texture, and higher fastness to washing while reducing an odor.

The treatment liquid for inkjet textile printing may contain an aqueous medium as a main component (e.g., 50 mass% or greater). For example, the remaining portion of the treatment liquid for inkjet textile printing other than the water-soluble cationic polymer and the ammonium formate may be an aqueous medium. The treatment liquid for inkjet textile printing may contain, for example, a surfactant as appropriate.

The aqueous medium contained in the treatment liquid for inkjet textile printing may be any medium containing water. For example, the aqueous medium may contain water as a main component (e.g., 50 mass% or greater) or may be water. The aqueous medium may function as a solvent or a dispersion medium in the treatment liquid for inkjet textile printing. The water content relative to the aqueous medium is, for example, 50 mass% or greater, specifically 90 mass% or greater, or more specifically 100 mass%. The aqueous medium may contain water and further an organic solvent. In other words, the aqueous medium may be an aqueous medium containing water and an organic solvent. For the aqueous medium containing an organic solvent, the content of the organic solvent relative to the treatment liquid for inkjet textile printing may be, for example, 3 to 50 mass% inclusive to provide a dry-resistant pretreatment liquid having viscosity for stable ejection.

Examples of the organic solvent include a glycol compound, an alcohol compound (e.g., a polyhydric alcohol), an ether compound (e.g., an ether compound of a polyhydric alcohol), a nitrogen-containing compound, a sulfur-containing compound, an aliphatic hydrocarbon, a ketone compound, an ester compound, a vegetable oil, and alkylene carbonate.

Examples of the glycol compound include ethylene glycol, 1,3-propanediol, propylene glycol, 1,2-pentanediol, 1,5-pentanediol, 1,2-octanediol, 1,8-octanediol, 3-methyl-1,3-butanediol, 3-methyl-1,5-pentanediol, diethylene glycol, triethylene glycol, and tetraethylene glycol.

Examples of the polyhydric alcohol include a diol compound with five to eight carbon atoms (first diol compound), a diol compound with two to four carbon atoms (second diol compound), 1,2,6-hexanetriol, glycerin, trimethylolpropane, a sugar alcohol (e.g., xylitol), and sugars (e.g., xylose, glucose, and galactose).

Examples of the first diol compound include 2-methylpentane-2,4-diol, triethylene glycol, tetraethylene glycol,

1,5-pentane diol, and 1,2-hexanediol.

Examples of the second diol compound include ethylene glycol, 1,2-propanediol, 1,3-propanediol, butylene glycol, and diethylene glycol.

Examples of the alcohol compound other than the polyhydric alcohol include methanol, ethanol, isopropanol, butanol, and benzyl alcohol.

Examples of the ether compound include an ether compound of a polyhydric alcohol. Examples of the ether compound of a polyhydric alcohol include a glycol ether compound and an ethylene oxide adduct of diglycerin. Examples of the glycol ether compound include ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, diethylene glycol diethyl ether, diethylene glycol diethyl ether, triethylene glycol monomethyl ether, triethylene glycol monoethyl ether, triethylene glycol monobutyl ether, propylene glycol monomethyl ether, propylene glycol monobutyl ether, and dipropylene glycol monobutyl ether.

Examples of the nitrogen-containing compound include a lactam compound, 1,3-dimethylimidazolidinone, formamide, dimethylformamide, and triethanolamine. Examples of the lactam compound include pyrrolidone such as 2-pyrrolidone, N-methyl-2-pyrrolidone, cyclohexylpyrrolidone, and N-methyl-2-pyrrolidone.

Examples of the sulfur-containing compound include thiodiethanol, thiodiglycerol, sulfolane, and dimethyl sulfoxide.

Examples of the aliphatic hydrocarbon include a straight-chain hydrocarbon, an isoparaffinic hydrocarbon, and a naphthenic hydrocarbon.

Examples of the ketone compound include methyl ethyl ketone.

Examples of the ester compound include an acetate compound such as diethylene glycol monoethyl ether acetate.

Examples of the vegetable oil include oils such as soybean oil, linseed oil, rice bran oil, tung oil, castor oil, dehydrated castor oil, corn oil, safflower oil, Jatropha curcas oil, regenerated vegetable oil, canol oil, rapeseed oil, tung oil, peanut oil, cottonseed oil, sesame oil, sunflower oil, olive oil, palm oil, palm kernel oil, and coconut oil, and thermally polymerized oils and oxidative polymerized oils of the listed oils.

Examples of the alkylene carbonate include propylene carbonate and ethylene carbonate.

The organic solvent may be, among the organic solvents described above, a glycol compound, or specifically 3-methyl-1,5-pentanediol. One of these organic solvents may be used alone, or two or more of these may be used in combination.

The content of the aqueous medium is not limited, and may be the remaining portion of the treatment liquid for inkjet textile printing. More specifically, the content of the aqueous medium relative to the treatment liquid for inkjet textile printing may be, for example, 5 to 70 mass% inclusive, or specifically 10 to 60 mass% inclusive.

The treatment liquid for inkjet textile printing may contain a surfactant for, for example, adjusting the surface tension. The treatment liquid for inkjet textile printing containing a surfactant also has higher wettability for fabric as a recording medium. The surfactant may be one of, but is not limited to, a nonionic surfactant, a cationic surfactant, an anionic surfactant, or an amphoteric surfactant.

Examples of the nonionic surfactant include a silicone surfactant such as polyether modified silicone and an acetylene glycol surfactant such as an ethylene oxide adduct of acetylene diol.

Examples of the cationic surfactant include a quaternary ammonium surfactant and an amine surfactant.

Examples of the anionic surfactant include a carboxylic acid surfactant, a carboxylate surfactant, and a sulfate ester salt surfactant.

Examples of the amphoteric surfactant include a carboxylate amphoteric surfactant, a sulfate ester salt amphoteric surfactant, a sulfonate amphoteric surfactant, and a phosphate ester salt amphoteric surfactant.

One of these surfactants may be used alone, or two or more of these may be used in combination.

For the treatment liquid for inkjet textile printing containing the surfactant, the content of the surfactant relative to the treatment liquid for inkjet textile printing may be, but not limited to, 0.05 to 5 mass% inclusive, or specifically 0.1 to 5 mass% inclusive.

The treatment liquid for inkjet textile printing may further contain known additives (specifically, a solubility stabilizer, an anti-drying agent, an antioxidant, a viscosity modifier, a pH adjuster, an antifungal agent, and other additives) as appropriate. The pH adjuster may be any adjuster, and may be, for example, a sodium hydroxide solution.

The lower pH limit of the treatment liquid for inkjet textile printing, may be, but not limited to, 7 or greater to reduce corrosion of an inkjet textile printing apparatus (e.g., inkjet heads). To further reduce deterioration in the texture of the obtained printed textile, the upper pH limit of the treatment liquid for inkjet textile printing may be 9.5 or less, or specifically 8 or less. The pH of the treatment liquid for inkjet textile printing can be adjusted by, for example, changing the composition of the treatment liquid for inkjet textile printing. More specifically, the pH of the treatment liquid for inkjet textile printing can be adjusted by changing the content of the sodium formate in the treatment liquid for inkjet textile printing or by changing the type or the content of the pH adjuster added to the treatment liquid for inkjet textile printing. For the treatment liquid for inkjet

textile printing containing the other organic acid and the metal salt, the pH of the treatment liquid for inkjet textile printing can also be adjusted by changing the types or the contents of the other organic acid and the metal salt. Note that the pH of the treatment liquid for inkjet textile printing can be measured using, for example, a known pH meter.

The treatment liquid for inkjet textile printing is produced by, for example, mixing, with an agitator, the water-soluble cationic polymer, the ammonium formate, the aqueous medium, and components (e.g., a metal salt and a surfactant) optionally added as appropriate. The mixing time may be, but not limited to, for example, 1 to 30 minutes inclusive.

Fabric

The fabric onto which the treatment liquid for inkjet textile printing is ejected and deposited is a printing substrate (recording medium) used with an inkjet textile printing method. Examples of the fabric include a fiber-containing product and a product made of fiber. Examples of the fabric include woven fabric, knitted fabric, non-woven fabric, and braided fabric. Examples of the fiber include natural fibers such as cotton, silk, wool, and hemp, chemical fibers such as polyester fiber, acrylic fiber, polyurethane fiber, polyamide fiber, rayon, cupra, and acetate, and blended fibers of these. The fabric may include one of these types of fibers or may include two or more of these fibers in combination. More specifically, the fabric may be, for example, cotton, silk, linen, polyester, acetate, rayon, polyamide, or polyurethane. The fabric may be polyester tropical fabric, which is plain-woven fabric made of polyester threads. One of these examples of the fabric may be used alone, or two or more of these may be used in combination.

Ink Set for Inkjet Textile Printing

As described above, the treatment liquid for inkjet textile printing is ejected and deposited onto fabric as a recording medium, in addition to ink for inkjet textile printing (hereafter also simply referred to as ink). The treatment liquid for inkjet textile printing may thus be used as an ink set for inkjet textile printing together with the ink. In other words, the ink set for inkjet textile printing includes the treatment liquid for inkjet textile printing and the ink. When the treatment liquid for inkjet textile printing is used as, for example, a pretreatment liquid, the treatment liquid for inkjet textile printing is ejected and deposited onto the fabric before the ink is deposited onto the fabric. The ink may be any ink that is used with an inkjet textile printing method. Examples of the ink include ink for inkjet textile printing containing an anionic pigment. When the treatment liquid for inkjet textile printing is used as, for example, a pretreatment liquid, the ink set for inkjet textile printing may further include, as a post-treatment liquid, a treatment liquid for inkjet textile printing different from the treatment liquid for inkjet textile printing as a pretreatment liquid. In other words, the ink set for inkjet textile printing may include the treatment liquid for inkjet textile printing (pretreatment liquid), the ink, and the post-treatment liquid.

Ink for Inkjet Textile Printing

The ink for inkjet textile printing may be any ink that can be used with an inkjet textile printing method. The ink may contain, for example, a color material and an aqueous medium. The ink may contain at least one selected from the group consisting of binder resin particles and a surfactant as appropriate.

The color material may be any color material that is contained in ink used with an inkjet textile printing method, and may be, for example, a pigment such as an anionic pigment. The pigment may be, for example, a dispersible pigment dispersed in an aqueous medium such as water. The pigment may have a volume median diameter ($D_{50}$) of 30 to 250 nm inclusive, or specifically 70 to 160 nm inclusive, to provide ink with high optical density, high color hue, and high color stability. Note that the volume median diameter ($D_{50}$) is measured with a laser diffraction-scattering particle size distribution analyzer (e.g., LA-950 manufactured by Horiba, Ltd.).

The pigment may be any pigment that allows formation of intended images (shows a color constituting intended images), such as known organic pigments and inorganic pigments. Examples of the organic pigments include azo pigments, polycyclic pigments, nitro pigments, nitroso pigments, and aniline black. Examples of the azo pigments include azo lake pigments, insoluble azo pigments, condensed azo pigments, and chelate azo pigments. Examples of the polycyclic pigments include phthalocyanine pigments, perylene pigments, anthraquinone pigments, quinacridone pigments, dioxazine pigments, thioindigo pigments, isoindolinone pigments, and quinophthalone pigments. Examples of the inorganic pigments include carbon blacks such as acetylene black and lamp black.

The pigments may be classified by color. Examples of the pigments include a yellow pigment, an orange pigment, a red pigment, a blue pigment, a green pigment, and a black pigment.

Examples of the yellow pigment include C.I. Pigment Yellow 12, C.I. Pigment Yellow 13, C.I. Pigment Yellow 14, C.I. Pigment Yellow 15, C.I. Pigment Yellow 17, C.I. Pigment Yellow 74, C.I. Pigment Yellow 93, C.I. Pigment Yellow 94, C.I. Pigment Yellow 95, C.I. Pigment Yellow 109, C.I. Pigment Yellow 110, Pigment Yellow 120, C.I. Pigment Yellow 128, C.I. Pigment Yellow 138, C.I. Pigment Yellow 139, C.I. Pigment Yellow 151, C.I. Pigment Yellow 154, C.I. Pigment Yellow 155,

C.I. Pigment Yellow 173, C.I. Pigment Yellow 180, C.I. Pigment Yellow 185, and C.I. Pigment Yellow 193.

Examples of the orange pigment include C.I. Pigment Orange 31, C.I. Pigment Orange 34, C.I. Pigment Orange 36, C.I. Pigment Orange 43, C.I. Pigment Orange 61, C.I. Pigment Orange 63, and C.I. Pigment Orange 71.

Examples of the red pigment include C.I. Pigment Red 2, C.I. Pigment Red 3, C.I. Pigment Red 5, C.I. Pigment Red 6, C.I. Pigment Red 7, C.I. Pigment Red 15, C.I. Pigment Red 16, C.I. Pigment Red 48:1, C.I. Pigment Red 53:1, C.I. Pigment Red 57:1, C.I. Pigment Red 122, C.I. Pigment Red 123, C.I. Pigment Red 139, C.I. Pigment Red 144, C.I. Pigment Red 149, C.I. Pigment Red 150, C.I. Pigment Red 166, C.I. Pigment Red 177, C.I. Pigment Red 178, C.I. Pigment Red 202, and C.I. Pigment Red 222.

Examples of the blue pigment include C.I. Pigment Blue 15, C.I. Pigment Blue 15:2, C.I. Pigment Blue 15:3, and C.I. Pigment Blue 16.

Examples of the green pigment include C.I. Pigment Green 7.

Examples of the black pigment include C.I. Pigment Black 7.

For the color material, one of these pigments may be used alone, two or more of these may be used in combination.

The pigment may be an anionic pigment for the following reasons when the ink is used with the treatment liquid for inkjet textile printing as in the present embodiment. The anionic pigment aggregates, on a surface of the recording medium, with the water-soluble cationic polymer contained in the treatment liquid for inkjet textile printing through ionic bonding. The anionic pigment aggregates with the water-soluble cationic polymer to reduce permeation of the binder resin particles (described later) contained in the ink into the recording medium. This prevents the binder resin particles from permeating into the gaps between fiber filaments of the fabric and binding the filaments to each other. This can improve the texture (e.g., the fabric hand) of the obtained printed textile.

Examples of the anionic pigment include a pigment having an anion group such as a carboxy group, a sulfonic acid group, a phosphoric acid group, a phosphonic acid group, a phenylphosphonic acid group, or a phenylcarboxy group (a pigment in which an anion group is introduced).

The content of the color material (pigment) relative to the ink may be, but not limited to, for example, 1 to 12 mass% inclusive, or specifically 1 to 7 mass% inclusive, to increase the optical density while maintaining high ink flowability. Ink with a higher color material (pigment) content (e.g., 1 mass% or greater) tends to increase optical density. Ink with a lower color material (pigment) content (e.g., 12 mass% or less) has high flowability.

The aqueous medium contained in the ink may be any medium containing water. For example, the aqueous medium in the ink may be the same as or similar to the aqueous medium contained in the treatment liquid for inkjet textile printing. For example, the organic solvent and the content of the organic solvent in the aqueous medium may also be the same as or similar to those in the aqueous medium contained in the treatment liquid for inkjet textile printing. For the ink containing the organic solvent, the content of the organic solvent relative to the ink may be, for example, 3 to 50 mass% inclusive to provide dry-resistant ink having viscosity for stable ejection. The aqueous medium may function as a solvent or a dispersion medium in the ink. The content of the aqueous medium is not limited, and may be the remaining portion of the treatment liquid for inkjet textile printing. More specifically, the content of the aqueous medium relative to the ink may be, for example, 5 to 70 mass% inclusive, or specifically 10 to 60 mass% inclusive.

The ink may contain binder resin particles for, for example, increasing image fixation. The binder resin particles may be dispersed in the aqueous medium. The binder resin particles may function as a binder that binds fabric as a printing substrate to a color material such as a pigment. The ink containing the binder resin particles can thus provide a printed textile on which images are more stably fixed.

Examples of a resin contained in the binder resin particles include, but are not limited to, a urethane resin, an acrylic resin, a methacrylic resin, a styrene-acrylic acid copolymer, a styrene-methacrylic acid copolymer, a styrene-maleic acid copolymer, a vinyl naphthalene-acrylic acid copolymer, a vinyl naphthalene-methacrylic acid copolymer, and a vinyl naphthalene-maleic acid copolymer. The resin contained in the binder resin particles may be, among the listed resins, a urethane resin. The content of the urethane resin in the binder resin particles may be 80 mass% or greater or may be 100 mass%. In other words, the binder resin particles may be particles of a urethane resin.

The content of the binder resin particles relative to the ink may be, but not limited to, for example, 1 to 20 mass% inclusive, or specifically 2 to 10 mass% inclusive, to increase image fixation while maintaining stable ink ejection. Ink with a higher content of the binder resin particles (e.g., 1 mass% or greater) tends to increase image fixation. Ink with a lower content of the binder resin particles (e.g., 20 mass% or less) can be ejected stably.

The ink may contain a surfactant for, for example, adjusting the surface tension. The ink containing a surfactant also has higher wettability for fabric as a recording substrate. The surfactant may be, but not limited to, one of a nonionic surfactant, a cationic surfactant, an anionic surfactant, or an amphoteric surfactant. The surfactant may be, for example, the same as or similar to the surfactant contained in the treatment liquid for inkjet textile printing.

The content of the surfactant relative to the ink may be, but not limited to, for example, 0.06 to 5 mass% inclusive, specifically 0.1 to 5 mass% inclusive, or more specifically 0.5 to 2 mass% inclusive.

The ink for inkjet textile printing may further contain known additives (specifically, a solubility stabilizer, an anti-

drying agent, an antioxidant, a viscosity modifier, a pH adjuster, an antifungal agent, and other additives) as appropriate.

The ink is prepared by, for example, mixing, with an agitator, the color material (pigment), the aqueous medium, and components (e.g., binder resin particles, and a surfactant) optionally added as appropriate. The mixing time may be, but not limited to, for example, 1 to 30 minutes inclusive.

Post-Treatment Liquid

The post-treatment liquid may be any liquid that can be used as a post-treatment liquid for inkjet textile printing. The post-treatment liquid may contain, for example, an emulsion of a silicone oil. The post-treatment liquid containing the emulsion of the silicone oil increases the smoothness of the fabric surface and the rubbing fastness. The post-treatment liquid may contain an aqueous medium as a main component (e.g., 50 mass% or greater) and may contain a surfactant as appropriate.

The silicone oil may be, but not limited to, dimethyl silicone oil, amino group-containing silicone oil, carboxyl group-containing silicone oil, phenolic hydroxy group-containing silicone oil, silanol group-containing silicone oil, epoxy group-containing silicone oil, mercapto group-containing silicone oil, phenyl group-containing silicone oil, or long chain alkyl group-containing silicone oil. The emulsion of the silicone oil may contain one of these silicone oils alone or a combination of two or more of these silicone oils. One of these silicone oil emulsions may be used alone, or two or more of these may be used in combination.

The content of the emulsion of the silicone oil relative to the post-treatment liquid may be, but not limited to, 1 to 35 mass% inclusive to increase rubbing fastness.

The aqueous medium contained in the post-treatment liquid may be any medium containing water. For example, the aqueous medium contained in the post-treatment liquid may be the same as or similar to the aqueous medium contained in the treatment liquid for inkjet textile printing (or the aqueous medium contained in the ink). For example, the organic solvent and the content of the organic solvent in the aqueous medium may be the same as or similar to those in the aqueous medium contained in the treatment liquid for inkjet textile printing. For the post-treatment liquid containing the organic solvent, the content of the organic solvent relative to the post-treatment liquid may be, for example, 3 to 50 mass% inclusive to provide a dry-resistant post-treatment liquid having viscosity for stable ejection. The aqueous medium may function as a solvent or a dispersion medium in the post-treatment liquid. The content of the aqueous medium relative to the post-treatment liquid may be, but not limited to, the remaining portion of the post-treatment liquid other than, for example, the emulsion of the silicone oil. The content of the aqueous medium relative to the post-treatment liquid may be, for example, 50 to 90 mass% inclusive, or specifically 55 to 70 mass% inclusive.

The post-treatment liquid may contain a surfactant for, for example, adjusting the surface tension. The post-treatment liquid containing a surfactant also has higher wettability for fabric as a recording substrate. The surfactant may be, but not limited to, one of a nonionic surfactant, a cationic surfactant, an anionic surfactant, or an amphoteric surfactant.

The content of the surfactant relative to the post-treatment liquid may be, but not limited to, for example, 0 to 5 mass% inclusive, or specifically 0.1 to 5 mass%.

The post-treatment liquid may further contain known additives (specifically, a solubility stabilizer, an anti-drying agent, an antioxidant, a viscosity modifier, a pH adjuster, an antifungal agent, and other additives) as appropriate.

The post-treatment liquid is prepared by, for example, mixing, with an agitator, the emulsion of the silicone oil, the aqueous medium, and components optionally added as appropriate. The mixing time may be, but not limited to, for example, 1 to 30 minutes inclusive.

Inkjet Textile Printing Method

The inkjet textile printing method using the treatment liquid for inkjet textile printing may be any method for forming images on fabric by, for example, ejecting (using an inkjet system) the treatment liquid for inkjet textile printing and the ink onto the fabric. More specifically, the inkjet textile printing method includes, for example, sequentially ejecting the treatment liquid for inkjet textile printing and the ink for inkjet textile printing onto the fabric. More specifically, in another embodiment of the present disclosure, the inkjet textile printing method first includes ejecting and depositing the treatment liquid for inkjet textile printing onto fabric (pretreatment liquid ejection process). The method then includes ejecting and depositing the ink onto the fabric on which the treatment liquid for inkjet textile printing is deposited (ink ejection process). The treatment liquid for inkjet textile printing and the ink are sequentially ejected onto fabric in the manner described above to reduce an odor, thus providing a printed textile with high color development and improved texture while reducing an odor. The inkjet textile printing method may include ejecting and depositing the post-treatment liquid onto the fabric on which the ink is deposited (post-treatment liquid ejection process). The inkjet textile printing method may be implemented with, for example, an inkjet textile printing apparatus (described later).

Inkjet Textile Printing Apparatus

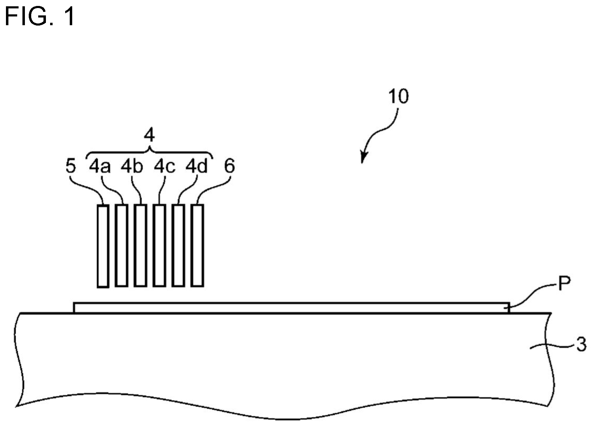

The inkjet textile printing apparatus may be any apparatus that allows implementation of the inkjet textile printing method and can implement the pretreatment liquid ejection process and the ink ejection process. More specifically, in another embodiment of the present disclosure, the inkjet textile printing apparatus includes a pretreatment liquid head that ejects and deposits the treatment liquid for inkjet textile printing onto fabric, and an ink head that ejects and deposits the ink onto the fabric on which the pretreatment liquid is deposited. As described above, the inkjet application apparatus can sequentially eject the treatment liquid for inkjet textile printing and the ink onto the fabric, thus providing a printed textile with high color development and improved texture while reducing an odor. The inkjet textile printing apparatus may further include a post-treatment liquid head that ejects and deposits the post-treatment liquid onto the fabric on which the ink is deposited. The inkjet textile printing apparatus may be, for example, the inkjet textile printing apparatus illustrated in FIG. 1. Note that FIG. 1 is a schematic diagram of an inkjet textile printing apparatus 10 (according to the other embodiment of the present disclosure), partially illustrating its structure. The inkjet textile printing apparatus 10 uses the treatment liquid for inkjet textile printing according to one embodiment of the present disclosure. FIG. 1 illustrates the components schematically. The size and the number of components may be changed as appropriate.

The inkjet textile printing apparatus 10 ejects (using an inkjet system) the treatment liquid for inkjet textile printing (pretreatment liquid), the ink, and the post-treatment liquid onto a printing substrate (fabric) P.

As illustrated in FIG. 1, the inkjet textile printing apparatus 10 includes a pretreatment liquid head 5, ink heads 4, a post-treatment liquid head 6, and a support 3. The ink heads 4 may include a first ink head 4a, a second ink head 4b, a third ink head 4c, and a fourth ink head 4d. The pretreatment liquid head 5, the ink heads 4, and the post-treatment liquid head 6 are inkjet heads.

The pretreatment liquid head 5 ejects the pretreatment liquid onto at least an image formation area on the printing substrate P. The pretreatment liquid head 5 may be any head, such as a piezoelectric head or a thermal inkjet head. The inkjet textile printing apparatus 10 may include one or more pretreatment liquid tanks (not illustrated) for storing the treatment liquid for inkjet textile printing. In this case, the treatment liquid for inkjet textile printing is supplied from the pretreatment liquid tanks to the pretreatment liquid head 5.

The ink heads 4 eject the ink onto the image formation area on the printing substrate P. The first ink head 4a, the second ink head 4b, the third ink head 4c, and the fourth ink head 4d included in the ink heads 4 eject different colors of ink (e.g., yellow ink, magenta ink, cyan ink, and black ink). The number of ink heads 4 is not limited to four, and may be one to three or five or more. The ink heads 4 may be any heads, such as piezoelectric heads or thermal inkjet heads. The inkjet textile printing apparatus 10 may include one or more ink tanks (not illustrated) for storing the ink. In this case, the treatment liquid is supplied from the ink tanks to the ink heads 4.

The post-treatment liquid head 6 ejects the post-treatment liquid onto at least the image formation area on the printing substrate P. The post-treatment liquid head 6 may be any head, such as a piezoelectric head or a thermal inkjet head. The inkjet textile printing apparatus 10 may include one or more post-treatment liquid tanks (not illustrated) for storing the post-treatment liquid. In this case, the post-treatment liquid is supplied from the post-treatment liquid tanks to the post-treatment liquid head 6.

The support 3 receives the printing substrate P. The pretreatment liquid head 5, the ink heads 4, and the post-treatment liquid head 6 are arranged above the support 3 to eject the treatment liquid for inkjet textile printing (pretreatment liquid), the ink, and the post-treatment liquid onto the printing substrate P. The support 3 is driven by a motor (not illustrated) to move horizontally in a direction from the pretreatment liquid head 5 toward the post-treatment liquid head 6 (e.g., in the right direction in FIG. 1). The support 3 moves horizontally to transport the printing substrate P on the support 3.

The inkjet textile printing method (the production of a printed textile) first includes horizontally moving the support 3 on which the printing substrate P is placed to transport the printing substrate P to a position facing the pretreatment liquid head 5. The pretreatment liquid is ejected from the pretreatment liquid head 5 onto the printing substrate P. The pretreatment liquid head 5 may eject the pretreatment liquid onto the image formation area on the printing substrate P alone, eject the treatment liquid for inkjet textile printing (pretreatment liquid) onto an area larger than the image formation area on the printing substrate P, or eject the pretreatment liquid onto the entire surface of the printing substrate P. The pretreatment liquid head 5 may eject the pretreatment liquid onto the image formation area on the printing substrate P alone to reduce the amount of the pretreatment liquid used and reduce deterioration in the hand of the printed textile.

After the pretreatment liquid is ejected from the pretreatment liquid head 5, the support 3 on which the printing substrate P is placed further moves horizontally to transport the printing substrate P to a position facing the ink heads 4. The ink is then ejected from the ink heads 4 onto the image formation area on the printing substrate P. In this manner, an image is formed with the ink for inkjet textile printing on the image formation area on the printing substrate P.

After the ink is ejected from the ink heads 4, the support 3 on which the printing substrate P is placed further moves horizontally to transport the printing substrate P to a position facing the post-treatment liquid head 6. The post-treatment liquid is ejected from the post-treatment liquid head 6 onto at least the image formation area on the printing substrate P. The post-treatment liquid head 6 may eject the post-treatment liquid onto the image formation area on the printing substrate P

alone, onto an area larger than the image formation area on the printing substrate P, or onto the entire surface of the printing substrate P. The post-treatment liquid head 6 may eject the post-treatment liquid onto the image formation area on the printing substrate P alone to reduce the amount of the post-treatment liquid used and reduce deterioration in the hand of the printed textile. In this manner, a treatment film is formed with the post-treatment liquid on the image formed in the image formation area on the printing substrate P.

After the post-treatment liquid is ejected from the post-treatment liquid head 6, the support 3 on which the printing substrate P is placed further moves horizontally to transport the printing substrate P to a position facing a heater (not illustrated) for heating the printing substrate P. The heater heats the printing substrate P to dry the pretreatment liquid, the ink, and the post-treatment liquid. The heating temperature may be any temperature such as 120 to 180 °C inclusive to dry the pretreatment liquid, the ink, and the post-treatment liquid appropriately. The heating time may be any duration such as 1 to 10 minutes inclusive to dry the pretreatment liquid, the ink, and the post-treatment liquid appropriately. The volatile components contained in the pretreatment liquid, the ink, and the post-treatment liquid deposited on the printing substrate P are dried through the heating, facilitating fixation of the pretreatment liquid, the ink, and the post-treatment liquid to the printing substrate P. This forms the printing substrate P (printed textile) including an image formed with the ink and treated with the pretreatment liquid and the post-treatment liquid.

In the inkjet textile printing apparatus 10, for example, the pretreatment liquid head 5, the ink heads 4, and the post-treatment liquid head 6 may move horizontally with the support 3 being stationary, rather than the support 3 moving horizontally as described above.

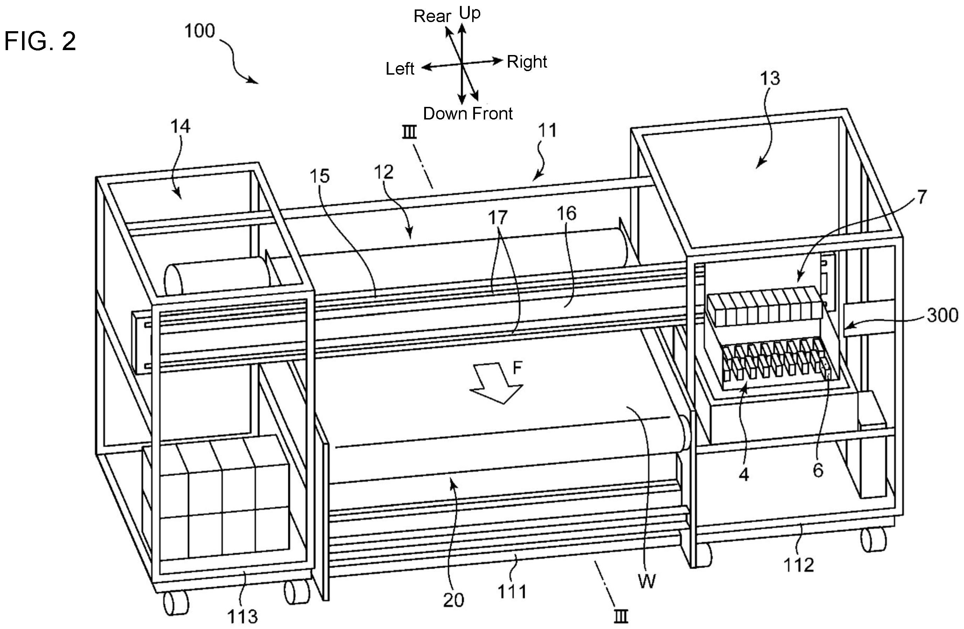

An inkjet recording apparatus as an inkjet textile printing apparatus that can use the treatment liquid for inkjet textile printing (pretreatment liquid) will now be described in detail. A specific example of the inkjet recording apparatus described below is an inkjet printer including ink heads that eject ink onto a wide and elongated recording medium. Note that the inkjet printer will now be described with reference to FIGs. 2 to 4.

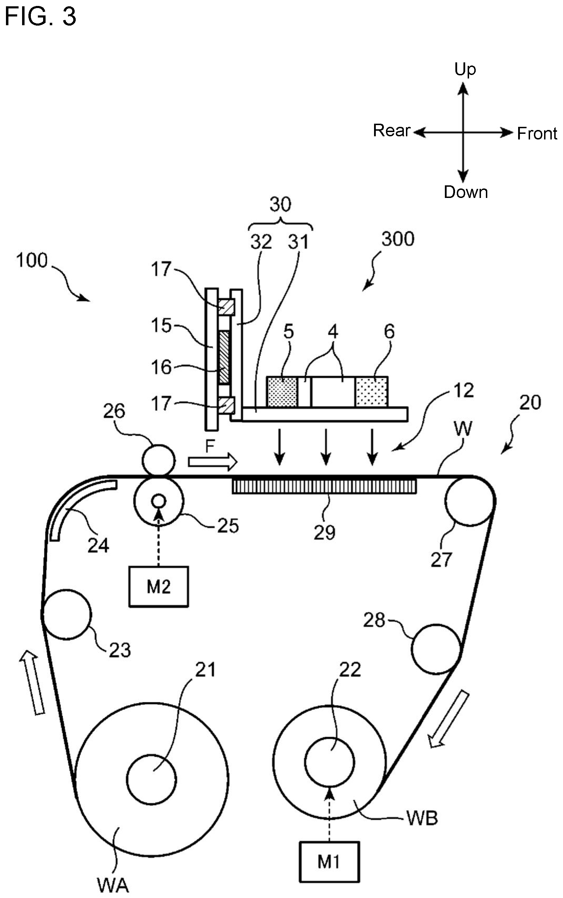

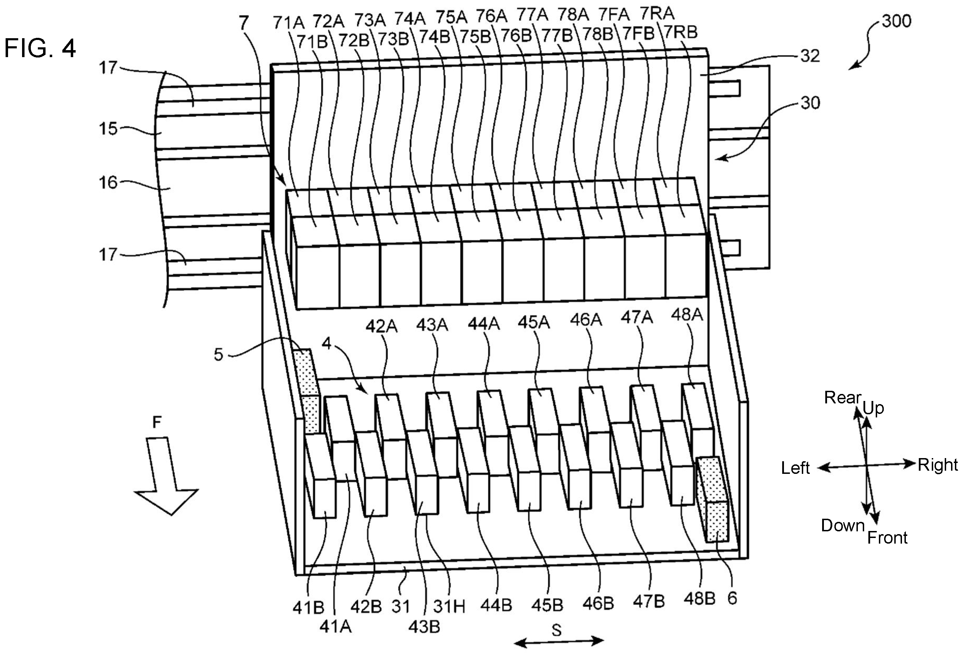

FIG. 2 is a perspective view of an inkjet printer 100 that uses the treatment liquid for inkjet textile printing according to one embodiment of the present disclosure, illustrating its overall structure. The inkjet printer 100 prints, with an inkjet system, images such as letters and patterns onto fabric as a printing substrate, and may perform, for example, digital textile printing. The inkjet printer may also print various images on a recording medium such as a paper sheet or a resin sheet, other than on fabric as a printing substrate. FIG. 3 is a schematic cross-sectional view taken along line III-III in FIG. 2. FIG. 4 is an enlarged perspective view of a carriage illustrated in FIG. 2.

The inkjet printer 100 prints images on a wide and elongated workpiece W (recording medium) with an inkjet system. The inkjet printer 100 is also used to form images on a printing substrate, or specifically, fabric as the workpiece W. In other words, the inkjet printer 100 is used as the inkjet textile printing apparatus in the present embodiment. Note that, in the present embodiment, the inkjet textile printing apparatus uses fabric as a recording medium, which is also referred to as the workpiece W. The workpiece W has a width of, for example, several meters. As illustrated in FIG. 2, the inkjet printer 100 includes an apparatus frame 11, and a workpiece feeder 20 and a carriage 300 incorporated in the apparatus frame 11. Note that, in the present embodiment, a lateral direction is a main scanning direction S (FIG. 4) for printing on the workpiece W, and a direction from the rear to the front is a subscanning direction (a feed direction F of the workpiece W intersecting with the main scanning direction S).

The apparatus frame 11 is a frame on which various components of the inkjet printer 100 are mounted. The workpiece feeder 20 intermittently feeds (transports) the workpiece W, moving the workpiece W in the feed direction F from the rear to the front in a printing area in which an inkjet printing process is performed. The carriage 300 carries the ink heads 4, the pretreatment liquid head 5, the post-treatment liquid head 6, and subtanks 7, and reciprocates in the main scanning direction S (lateral direction) intersecting with the feed direction F of the workpiece W during the inkjet printing process.

The apparatus frame 11 includes a center frame 111, a right frame 112, and a left frame 113. The center frame 111 is a frame on which various components of the inkjet printer 100 are mounted and has a lateral width corresponding to the workpiece feeder 20. The right frame 112 stands on the right of the center frame 111, and the left frame 113 stands on the left of the center frame 111. A printing area 12 in which a printing process is performed on the workpiece W is defined between the right frame 112 and the left frame 113.

The right frame 112 defines a maintenance area 13. The maintenance area 13 is an area into which the carriage 300 is retracted when the printing process is not performed. In the maintenance area 13, nozzles (ejection orifices) of the ink heads 4, the pretreatment liquid head 5, and the post-treatment liquid head 6 are, for example, cleaned or purged, and are also capped. The left frame 113 defines a turn-back area 14 for the carriage 300. The turn-back area 14 is an area for the carriage 300 that has performed the main scanning of the printing area 12 from right to left to temporarily enter before performing the main scanning in the reverse direction during the printing process.

The apparatus frame 11 receives, on its upper portion, a carriage guide 15 for guiding the carriage 300 to reciprocate in the lateral direction. The carriage guide 15 is a flat plate elongated in the lateral direction and is located above the workpiece feeder 20. The carriage guide 15 receives a timing belt 16 rotatable in the lateral direction (main scanning direction). The timing belt 16 is an endless belt drivable to rotate in the left direction or the right direction.

The carriage guide 15 includes a pair of upper and lower guide rails 17 holding the carriage 300 in a manner

reciprocable in the main scanning direction S. The pair of guide rails 17 extend parallel to each other in the lateral direction. The carriage 300 is engaged with the guide rails 17. The carriage 300 is fixed to the timing belt 16. In response to rotation of the timing belt 16 in the left direction or the right direction, the carriage 300 moves in the left direction or the right direction along the carriage guide 15 while being guided by the guide rails 17.

FIG. 3 will now be referred to mainly. The workpiece feeder 20 includes a feed roller 21 that unwinds the workpiece W before printing, and a take-up roller 22 that winds the workpiece W after printing. The feed roller 21 is located in a lower rear portion of the apparatus frame 11. The feed roller 21 is a winding shaft of a feed roll WA as a wound roll of the workpiece W before printing. The take-up roller 22 is located in a lower front portion of the apparatus frame 11. The take-up roller 22 is a winding shaft of a take-up roll WB as a wound roll of the workpiece W after the printing process. The take-up roller 22 includes a first motor M1 that rotates the take-up roller 22 about its axis to wind the workpiece W.

A path extending through the printing area 12 between the feed roller 21 and the take-up roller 22 is a feed path of the workpiece W. This feed path includes, in the order from upstream, a first tension roller 23, a workpiece guide 24, a transport roller 25 and a pinch roller 26, a turn roller 27, and a second tension roller 28. The first tension roller 23 applies a predetermined tension to the workpiece W upstream from the transport roller 25. The workpiece guide 24 redirects the workpiece W from upward to frontward and feeds the workpiece W into the printing area 12.

The transport roller 25 generates a feed force for intermittently feeding the workpiece W in the printing area 12. The transport roller 25, which is driven by a second motor M2, rotates about its axis and intermittently feeds the workpiece W frontward (in the predetermined feed direction F) to allow the workpiece W to pass through the printing area 12 (image formation position) facing the carriage 300. The pinch roller 26 faces the transport roller 25 from above and forms a feed nip with the transport roller 25.

The turn roller 27 redirects the workpiece W that has passed through the printing area 12 from frontward to downward, and guides the workpiece W to the take-up roller 22 after the printing process. The second tension roller 28 applies a predetermined tension to the workpiece W downstream from the transport roller 25. A platen 29 is located below the feed path of the workpiece W in the printing area 12.

The carriage 300 reciprocates, while being held by the guide rails 17 in a cantilevered manner, in the main scanning direction S (the lateral direction in FIGs. 2 and 3) intersecting with (perpendicular to in FIGs. 2 and 3) the feed direction F. The carriage 300 includes a carriage frame 30 as well as the ink heads 4, the pretreatment liquid head 5, the post-treatment liquid head 6, and the subtanks 7 mounted on the carriage frame 30 (FIG. 4). The carriage frame 30 includes a head support frame 31 and a back frame 32.

The head support frame 31 is a horizontal plate holding the ink heads 4, the pretreatment liquid head 5, and the post-treatment liquid head 6. The back frame 32 is a vertical plate extending upward from a rear edge of the head support frame 31. As described above, the timing belt 16 is fixed to the back frame 32. The guide rails 17 are engaged with the back frame 32. In other words, the back frame 32 is an engaging portion held by the guide rails 17 in a cantilevered manner in the example in FIG. 3. The head support frame 31 is a horizontal plate including a rear end portion held by the guide rails 17 in a cantilevered manner with the engaging portion.

Note that being held in a cantilevered manner refers to a state in which the engaging portion (back frame 32) in the carriage 300 held by the guide rails 17 as holding members is located either upstream or downstream from the middle of the carriage 300 in the feed direction F, with no other engaging portion in an area opposite to the area including the engaging portion. The engaging portion may be located outside an area including the ink heads 4, the pretreatment liquid head 5, and the post-treatment liquid head 6 in the feed direction F. In other words, the engaging portion may be located either upstream or downstream from the area including the ink heads 4, the pretreatment liquid head 5, and the post-treatment liquid head 6 in the feed direction F.

The carriage 300 will be described further. FIG. 4 is an enlarged perspective view of the carriage 300 illustrated in FIG. 2. FIG. 4 illustrates the feed direction F (subscanning direction) of the workpiece W and the main scanning direction S in which the carriage 300 moves. In the example illustrated in FIG. 4, the carriage 300 carries multiple ink heads 4 that eject ink onto the workpiece W for image formation, the pretreatment liquid head 5 and the post-treatment liquid head 6 that eject noncolor-developing treatment liquids, and multiple subtanks 7 that supply the ink, the pretreatment liquid, and the post-treatment liquid to the heads 4 to 6.

Each of the ink heads 4 includes many nozzles (ink ejection orifices) and an ink channel that guides ink to the nozzles. The nozzles eject ink droplets by, for example, piezoelectric ejection using piezoelectric elements or thermal ejection using heating elements. The ink may be, for example, the ink described above. In the example illustrated in FIG. 4, the multiple ink heads 4 can eject eight colors of ink. The ink heads 4 are mounted on the head support frame 31 in the carriage 300 in two arrays in the main scanning direction S. Two ink heads 4 are allocated for each color.

More specifically, in the example in FIG. 4, the ink heads 4 include a first upstream ink head 41A and a first downstream ink head 41B. These ink heads 4 eject, for example, yellow ink. The ink heads 4 also include a second upstream ink head 42A and a second downstream ink head 42B. These ink heads 4 eject, for example, magenta ink. In the same or a similar manner, two ink heads 4 that eject the same color of ink are arranged in a manner displaced from each other in the feed direction F and the main scanning direction S as illustrated in FIG. 4. With these two ink heads 4 being

paired, a total of eight pairs of ink heads 4 (the first upstream ink head 41A to an eighth upstream ink head 48A and the first downstream ink head 41B to an eighth downstream ink head 48B) eject different colors of ink. The ink may be the ink described above.

The pretreatment liquid head 5 and the post-treatment liquid head 6 are at positions different from the positions of the ink heads 4 in the feed direction F. The pretreatment liquid head 5 is upstream from the ink heads 4 in the feed direction F. In the example illustrated in FIG. 4, a single pretreatment liquid head 5 is located adjacent to the left end of the arrays of the ink heads 4. In the same or a similar manner, the post-treatment liquid head 6 is downstream from the ink heads 4 in the feed direction F. In the example illustrated in FIG. 4, a single post-treatment liquid head 6 is located at the right end of the arrays of the ink heads 4. In another example of the inkjet recording apparatus, multiple pretreatment liquid heads 5 or multiple post-treatment liquid heads 6 may be arranged.

Note that a series of heads including the ink heads 4, the pretreatment liquid head 5, and the post-treatment liquid head 6 arranged in the main scanning direction S is referred to as an array of heads, or simply an array. A series of heads including the ink heads 4, the pretreatment liquid head 5, and the post-treatment liquid head 6 arranged in the feed direction F is referred to as a line of heads, or simply a line.

The pretreatment liquid head 5 ejects a pretreatment liquid for a predetermined pretreatment onto the workpiece W. The pretreatment liquid is ejected from the pretreatment liquid head 5 onto an area of the workpiece W on which no ink has been ejected from the ink heads 4. The pretreatment liquid may be the treatment liquid for inkjet textile printing. Note that the treatment liquid for inkjet textile printing is a noncolor-developing treatment liquid.

The post-treatment liquid head 6 ejects a post-treatment liquid for a predetermined post-treatment onto the workpiece W on which ink has been deposited. The post-treatment liquid is ejected from the post-treatment liquid head 6 onto an area of the workpiece W on which ink has been ejected from the ink heads 4. The post-treatment liquid may be the post-treatment liquid described above. Note that the post-treatment liquid is a noncolor-developing treatment liquid.

The noncolor-developing treatment liquid refers to a liquid that is not perceptible as having developed a color to the naked eye when printed on a recording medium alone. The color includes colors with zero saturation, such as black, white, and gray. Although the noncolor-developing treatment liquid is basically a transparent liquid, a liter of treatment liquid in a liquid state may appear, for example, slightly white or another color, rather than being transparent completely. Such a faint color is not perceptible as having developed a color to the naked eye when printed on a recording medium alone. Note that some type of treatment liquid printed alone on a recording medium may cause a change such as adding gloss to the recording medium, but such a change is not referred to as developing a color.

The inkjet printer 100 uses the ink, the treatment liquid for inkjet textile printing (pretreatment liquid), and the post-treatment liquid to form an image with high color development and improved texture on fabric while reducing an odor.

In the example illustrated in FIGs. 2 to 4, the pretreatment liquid and the post-treatment liquid may be ejected onto substantially the entire surface of the workpiece W, or may be selectively ejected based on an image to be printed in the same manner as or in a similar manner to the ink. The pretreatment liquid, the ink, and the post-treatment liquid are ejected in this order onto an area of the workpiece W on which colors are printed based on an image. In this case, the ink may have one color or multiple colors. For an area on which no color is printed, or in other words, an area onto which no ink is ejected, no pretreatment liquid or no post-treatment liquid is basically ejected.

As illustrated in FIG. 4, the head support frame 31 includes openings 31H at the positions of the heads. The head support frame 31 receives the ink heads 4, the pretreatment liquid head 5, and the post-treatment liquid head 6 fitted in the corresponding openings 31H. The nozzles on the lower end face of the heads (the ink heads 4, the pretreatment liquid head 5, and the post-treatment liquid head 6) are exposed through the corresponding openings 31H.

The multiple subtanks 7 are supported by, with a holding frame (not illustrated), the carriage 300 above each of the heads (the ink heads 4, the pretreatment liquid head 5, and the post-treatment liquid head 6). Each of the multiple subtanks 7 is located to correspond to one of the ink heads 4, the pretreatment liquid head 5, or the post-treatment liquid head 6. Each of the subtanks 7 receives the ink, the pretreatment liquid, or the post-treatment liquid from a main tank 90 (described later) storing the ink, the pretreatment liquid, and the post-treatment liquid and supplies the ink, the pretreatment liquid, or the post-treatment liquid to the corresponding head 4, 5, or 6. Each of the subtanks 7 is connected to the corresponding head 4, 5, or 6 with a pipe (not illustrated in FIG. 4).

More specifically, in the example illustrated in FIG. 4, the multiple subtanks 7 include, in a rear area, a first supply subtank 71A to an eighth supply subtank 78A, a pretreatment supply subtank 7FA, and a post-treatment supply subtank 7RA arranged in the main scanning direction S. The multiple subtanks 7 also include, in a front area, a first collection subtank 71B to an eighth collection subtank 78B, a pretreatment collection subtank 7FB, and a post-treatment collection subtank 7RB arranged in the main scanning direction S.

The first supply subtank 71A and the first collection subtank 71B located leftmost in the carriage 300 store, for example, yellow ink containing a pigment. In this case, the first supply subtank 71A supplies the yellow ink to the first upstream ink head 41A and the first downstream ink head 41B (each referred to as a supply destination). The first collection subtank 71B stores the yellow ink collected from the first upstream ink head 41A and the first downstream ink head 41B. Note that part of the yellow ink is ejected from the first upstream ink head 41A and the first downstream ink head 41B onto

the workpiece W as described above. In the same or a similar manner, the second supply subtank 72A supplies magenta ink to the second upstream ink head 42A and the second downstream ink head 42B. The second collection subtank 72B stores the magenta ink collected from the second upstream ink head 42A and the second downstream ink head 42B. The other subtanks or the third to eighth subtanks also have the same structure and functions as or similar structure and functions to the subtanks described above.

The pretreatment supply subtank 7FA supplies the pretreatment liquid to the pretreatment liquid head 5, and the pretreatment collection subtank 7FB collects the pretreatment liquid from the pretreatment liquid head 5. The post-treatment supply subtank 7RA supplies the post-treatment liquid to the post-treatment liquid head 6, and the post-treatment collection subtank 7RB collects the post-treatment liquid from the post-treatment liquid head 6.

As described above, the inkjet printer 100 is an all-in-one printer including three types of heads, or the ink heads 4, the pretreatment liquid head 5, and the post-treatment liquid head 6, mounted on the single carriage 300. The inkjet printer 100 can integrally perform the pretreatment liquid ejection process and the post-treatment liquid ejection process in a textile printing process for performing inkjet printing on fabric in, for example, digital textile printing. This can simplify the textile printing process and reduce the size of the textile printing apparatus.

Note that the inkjet printer 100 performs the printing process on the workpiece W by serial printing. More specifically, for a wide workpiece W, the workpiece W cannot undergo printing while being fed continuously. With serial printing, the carriage 300 carrying the ink heads 4 for the colors repeatedly reciprocates in the main scanning direction S while the workpiece W is being intermittently fed in the feed direction F.

In the inkjet printer 100, the carriage 300 prints a strip image while moving in an outgoing direction, which is one of the directions along the main scanning direction S. During the main scanning in the outgoing direction, the feed of the workpiece W is stopped. The workpiece W on which the strip image has been printed is then fed forward in the feed direction F by a predetermined pitch. During the feed, the carriage 300 stays in the turn-back area 14 at the left end. After the workpiece W is fed forward, the carriage 300 turns back in a return direction opposite to the outgoing direction, as the timing belt 16 rotates in the reverse direction. During this time, the workpiece W is stationary. The carriage 300 then prints, while moving in the return direction, a subsequent strip image upstream from the strip image that has been printed in the movement in the outgoing direction. The same or similar movement is repeated subsequently.

As described above, techniques in various aspects are described herein, and some of the main techniques are overviewed below.

In a first aspect, a treatment liquid for inkjet textile printing contains a water-soluble cationic polymer, and ammonium formate.

In a second aspect, a treatment liquid for inkjet textile printing is the treatment liquid according to the first aspect in which a content of the ammonium formate relative to the treatment liquid is 0.1 to 25 mass% inclusive.

In a third aspect, a treatment liquid for inkjet textile printing is the treatment liquid according to the first aspect or the second aspect in which the water-soluble cationic polymer forms a salt with a succinate anion.

In a fourth aspect, a treatment liquid for inkjet textile printing is the treatment liquid according to any one of the first to third aspects in which a content of the water-soluble cationic polymer relative to the treatment liquid is 0.3 to 35 mass% inclusive.

In a fifth aspect, a treatment liquid for inkjet textile printing is the treatment liquid according to any one of the first to fourth aspects in which the treatment liquid has a pH of 7 to 9.5 inclusive.

In a sixth aspect, a treatment liquid for inkjet textile printing is the treatment liquid according to any one of the first to fifth aspects further containing a metal salt.

In a seventh aspect, a treatment liquid for inkjet textile printing is the treatment liquid according to any one of the first to sixth aspects in which the treatment liquid is a pretreatment liquid.

In an eighth aspect, a treatment liquid for inkjet textile printing is the treatment liquid according to any one of the first to seventh aspects further containing an organic acid ammonium salt consisting of an organic acid having a vapor pressure less than or equal to 2 kPa at 20 °C and ammonia.

In a ninth aspect, a treatment liquid for inkjet textile printing is the treatment liquid according to the eighth aspect in which a content of the organic acid ammonium salt relative to the water-soluble cationic polymer is 10 mass% or greater.

In a tenth aspect, a treatment liquid for inkjet textile printing contains a water-soluble cationic polymer, and an organic acid ammonium salt consisting of an organic acid having a vapor pressure less than or equal to 2 kPa at 20 °C and ammonia.

In an eleventh aspect, an ink set for inkjet textile printing includes the treatment liquid according to any one of the first to tenth aspects, and ink for inkjet textile printing containing a pigment.

In a twelfth aspect, an inkjet textile printing method includes ejecting and depositing the treatment liquid according to any one of the first to tenth aspects onto fabric, and ejecting and depositing ink for inkjet textile printing containing a pigment onto the fabric on which the treatment liquid is deposited.

In a thirteenth aspect, an inkjet textile printing apparatus includes a treatment liquid head that ejects and deposits the treatment liquid according to any one of the first to tenth aspects onto fabric, and an ink head that ejects and deposits ink

for inkjet textile printing containing a pigment onto the fabric on which the treatment liquid is deposited.

In the above aspects of the present invention, the treatment liquid for inkjet textile printing, the ink set for inkjet textile printing, the inkjet textile printing method, and the inkjet textile printing apparatus can provide a printed textile with high color development and improved texture while reducing an odor.

One or more embodiments of the present disclosure will be described more specifically below with reference to working examples. However, embodiments of the present disclosure are not limited to such working examples.

## Working Examples

### Working Example 1

A treatment liquid for inkjet textile printing (pretreatment liquid 1) in working example 1 was obtained by mixing 3 parts by mass (solid content) of a copolymer of diallyldimethylammonium chloride and sulfur dioxide (PAS-A5 manufactured by Nittobo Medical Co., Ltd., weight-average molecular weight, or Mw, of 4000), as a water-soluble cationic polymer, in which some of the chloride ions were ion-exchanged to succinate anions, 8.2 parts by mass of ammonium formate (manufactured by Yoneyama Chemical Industry Co., Ltd.), 0.5 parts by mass of magnesium acetate (manufactured by Yoneyama Chemical Industry Co., Ltd.) as a metal salt, 0.02 parts by mass of a nonionic surfactant (a silicone surfactant, Silface SAG503A manufactured by Nissin Chemical Industry Co., Ltd.) as a surfactant, 37 parts by mass of 3-methyl-1,5-pentanediol (MPD manufactured by Kuraray Co., Ltd.) as an organic solvent, 1.0 part by mass of a 1 mol/L sodium hydroxide solution (manufactured by FUJIFILM Wako Pure Chemical Corporation) as a pH adjuster, and the remaining parts by mass (50.28 parts by mass) of water, and filtering the mixture with a 5-μm filter. The formulation of pretreatment liquid 1 was 3.0 mass% of the water-soluble cationic polymer, 8.2 mass% (1.30 mol/L) of the ammonium formate, 0.5 mass% of the metal salt, 0.02 mass% of the surfactant, 37 mass% of the organic solvent, 1.0 mass% of the pH adjuster, and the remaining mass% (50.28 mass%) of water. The obtained pretreatment liquid 1 was measured with a pH meter (D-71 manufactured by Horiba, Ltd.), and the result was 7.21.

### Working Example 2

A treatment liquid for inkjet textile printing (pretreatment liquid 2) in working example 2 was obtained by mixing 3.0 parts by mass (solid content) of the water-soluble cationic polymer, 4.0 parts by mass of the ammonium formate, 0.5 parts by mass of the metal salt (the magnesium acetate), 0.02 parts by mass of the surfactant (the nonionic surfactant), 40 parts by mass of the organic solvent (3-methyl-1,5-pentanediol), 1.0 part by mass of the pH adjuster, and the remaining parts by mass (51.48 parts by mass) of water, and filtering the mixture with a 5-μm filter. The formulation of pretreatment liquid 2 was 3.0 mass% of the water-soluble cationic polymer, 4.0 mass% (0.63 mol/L) of the ammonium formate, 0.5 mass% of the metal salt, 0.02 mass% of the surfactant, 40 mass% of the organic solvent, 1.0 mass% of the pH adjuster, and the remaining mass% (51.48 mass%) of water. The obtained pretreatment liquid 2 was measured with the pH meter, and the result was 7.15.

### Working Example 3

A treatment liquid for inkjet textile printing (pretreatment liquid 3) in working example 3 was obtained by mixing 3.0 parts by mass (solid content) of the water-soluble cationic polymer, 10 parts by mass of the ammonium formate, 0.5 parts by mass of the metal salt (the magnesium acetate), 0.02 parts by mass of the surfactant (the nonionic surfactant), 35 parts by mass of the organic solvent (3-methyl-1,5-pentanediol), 1.0 part by mass of the pH adjuster, and the remaining parts by mass (50.48 parts by mass) of water, and filtering the mixture with a 5-μm filter. The formulation of pretreatment liquid 3 was 3.0 mass% of the water-soluble cationic polymer, 10 mass% (1.59 mol/L) of the ammonium formate, 0.5 mass% of the metal salt, 0.02 mass% of the surfactant, 35 mass% of the organic solvent, 1.0 mass% of the pH adjuster, and the remaining mass% (50.48 mass%) of water. The obtained pretreatment liquid 3 was measured with the pH meter, and the result was 7.22.

### Working Example 4

A treatment liquid for inkjet textile printing (pretreatment liquid 4) in working example 4 was obtained by mixing 3.0 parts by mass (solid content) of the water-soluble cationic polymer, 20 parts by mass of the ammonium formate, 0.5 parts by mass of the metal salt (the magnesium acetate), 0.02 parts by mass of the surfactant (the nonionic surfactant), 25 parts by mass of the organic solvent (3-methyl-1,5-pentanediol), 1.0 part by mass of the pH adjuster, and the remaining parts by mass (50.48 parts by mass) of water, and filtering the mixture with a 5-μm filter. The formulation of pretreatment liquid 4 was 3.0 mass% of the water-soluble cationic polymer, 20 mass% (3.17 mol/L) of the ammonium formate, 0.5 mass% of the

metal salt, 0.02 mass% of the surfactant, 25 mass% of the organic solvent, 1.0 mass% of the pH adjuster, and the remaining mass% (50.48 mass%) of water. The obtained pretreatment liquid 4 was measured with the pH meter, and the result was 7.25.

Working Example 5

A treatment liquid for inkjet textile printing (pretreatment liquid 5) in working example 5 was obtained by mixing 3.0 parts by mass (solid content) of the water-soluble cationic polymer, 8.2 parts by mass of the ammonium formate, 0.02 parts by mass of the surfactant (the nonionic surfactant), 37 parts by mass of the organic solvent (3-methyl-1,5-pentanediol), 1.0 part by mass of the pH adjuster, and the remaining parts by mass (50.78 parts by mass) of water, and filtering the mixture with a 5-μm filter. The formulation of pretreatment liquid 5 was 3.0 mass% of the water-soluble cationic polymer, 8.2 mass% (1.30 mol/L) of the ammonium formate, 0.02 mass% of the surfactant, 37 mass% of the organic solvent, 1.0 mass% of the pH adjuster, and the remaining mass% (50.78 mass%) of water. The obtained pretreatment liquid 5 was measured with the pH meter, and the result was 7.20.

Comparative Example 1

A treatment liquid for inkjet textile printing (pretreatment liquid 6) in comparative example 1 was obtained by mixing 3.0 parts by mass (solid content) of the water-soluble cationic polymer, 10 parts by mass of ammonium acetate (manufactured by Yoneyama Chemical Industry Co., Ltd.), 0.5 parts by mass of the metal salt (the magnesium acetate), 0.02 parts by mass of the surfactant (the nonionic surfactant), 31 parts by mass of the organic solvent (3-methyl-1,5-pentanediol), and the remaining parts by mass (55.48 parts by mass) of water, and filtering the mixture with a 5-μm filter. The formulation of pretreatment liquid 6 was 3.0 mass% of the water-soluble cationic polymer, 10 mass% (1.30 mol/L) of the ammonium acetate, 0.5 mass% of the metal salt, 0.02 mass% of the surfactant, 31 mass% of the organic solvent, and the remaining mass% (55.48 mass%) of water. The obtained pretreatment liquid 6 was measured with the pH meter, and the result was 7.05.

Comparative Example 2

A treatment liquid for inkjet textile printing (pretreatment liquid 7) in comparative example 2 was obtained by mixing 3.0 parts by mass (solid content) of the water-soluble cationic polymer, 14 parts by mass of ammonium lactate (manufactured by Yoneyama Chemical Industry Co., Ltd.), 0.5 parts by mass of the metal salt (the magnesium acetate), 0.02 parts by mass of the surfactant (the nonionic surfactant), 26 parts by mass of the organic solvent (3-methyl-1,5-pentanediol), 8.0 parts by mass of the pH adjuster, and the remaining parts by mass (48.48 parts by mass) of water, and filtering the mixture with a 5-μm filter. The formulation of pretreatment liquid 7 was 3.0 mass% of the water-soluble cationic polymer, 14 mass% (1.31 mol/L) of the ammonium lactate, 0.5 mass% of the metal salt, 0.02 mass% of the surfactant, 26 mass% of the organic solvent, 8.0 mass% of the pH adjuster, and the remaining mass% (48.48 mass%) of water. The obtained pretreatment liquid 7 was measured with the pH meter, and the result was 7.30.

Comparative Example 3

A treatment liquid for inkjet textile printing (pretreatment liquid 8) in comparative example 3 was obtained by mixing 3.0 parts by mass (solid content) of the water-soluble cationic polymer, 18 parts by mass of ammonium benzoate (manufactured by FUJIFILM Wako Pure Chemical Corporation), 0.5 parts by mass of the metal salt (the magnesium acetate), 0.02 parts by mass of the surfactant (the nonionic surfactant), 25 parts by mass of the organic solvent (3-methyl-1,5-pentanediol), and the remaining parts by mass (53.48 parts by mass) of water, and filtering the mixture with a 5-μm filter. The formulation of pretreatment liquid 8 was 3.0 mass% of the water-soluble cationic polymer, 18 mass% (1.29 mol/L) of the ammonium benzoate, 0.5 mass% of the metal salt, 0.02 mass% of the surfactant, 25 mass% of the organic solvent, and the remaining mass% (53.48 mass%) of water. The obtained pretreatment liquid 8 was measured with the pH meter, and the result was 7.01.

Comparative Example 4

A treatment liquid for inkjet textile printing (pretreatment liquid 9) in comparative example 4 was obtained by mixing 3.0 parts by mass (solid content) of the water-soluble cationic polymer, 15 parts by mass of ammonium succinate (manufactured by Kanto Chemical Co., Inc.), 0.5 parts by mass of the metal salt (the magnesium acetate), 0.02 parts by mass of the surfactant (the nonionic surfactant), 26 parts by mass of the organic solvent (3-methyl-1,5-pentanediol), and the remaining parts by mass (55.48 parts by mass) of water, and filtering the mixture with a 5-μm filter. The formulation of

pretreatment liquid 9 was 3.0 mass% of the water-soluble cationic polymer, 15 mass% (0.99 mol/L) of the ammonium succinate, 0.5 mass% of the metal salt, 0.02 mass% of the surfactant, 26 mass% of the organic solvent, and the remaining mass% (55.48 mass%) of water. The obtained pretreatment liquid 9 was measured with the pH meter, and the result was 7.23.

Comparative Example 5

A treatment liquid for inkjet textile printing (pretreatment liquid 10) in comparative example 5 was obtained by mixing 3.0 parts by mass (solid content) of the water-soluble cationic polymer, 9.0 parts by mass of triammonium citrate (manufactured by FUJIFILM Wako Pure Chemical Corporation), 0.5 parts by mass of the metal salt (the magnesium acetate), 0.02 parts by mass of the surfactant (the nonionic surfactant), 31 parts by mass of the organic solvent (3-methyl-1,5-pentanediol), and the remaining parts by mass (56.48 parts by mass) of water, and filtering the mixture with a 5-μm filter. The formulation of pretreatment liquid 9 was 3.0 mass% of the water-soluble cationic polymer, 9.0 mass% (0.37 mol/L) of the triammonium citrate, 0.5 mass% of the metal salt, 0.02 mass% of the surfactant, 31 mass% of the organic solvent, and the remaining mass% (56.48 mass%) of water. The obtained pretreatment liquid 10 was measured with the pH meter, and the result was 7.11.

Note that the treatment liquid for inkjet textile printing in working example 1 was prepared to have an ammonium formate content of 1.30 mol/L. The treatment liquids for inkjet textile printing in comparative examples 1 to 3 were prepared to have an organic acid ammonium salt content of 1.30 mol/L. The organic acid ammonium salt contained in the treatment liquids for inkjet textile printing in comparative examples 4 and 5 cannot be dissolved to have the content of 1.30 mol/L. Thus, the treatment liquids for inkjet textile printing in comparative examples 4 and 5 were prepared to contain a maximum amount of organic acid ammonium salt that can be dissolved.

The treatment liquids for inkjet textile printing prepared as described above were evaluated with the method described below.

Printed textiles were obtained by ejecting and depositing the treatment liquids for inkjet textile printing onto fabric as a printing substrate. More specifically, the printed textiles were obtained in the manner described below. In inkjet textile printing, fabric as a printing substrate was polyester tropical fabric (manufactured by Toray Industries, Inc.). The printed textiles were produced with a flatbed printing jig (a flatbed inkjet recording apparatus corresponding to the apparatus in FIG. 1 including inkjet heads, a prototype manufactured by Kyocera Corporation) including inkjet heads (KJ4B manufactured by Kyocera Corporation) arranged in the feed direction. Each of the treatment liquids for inkjet textile printing was introduced into a first inkjet head (downstream in the feed direction). Ink for inkjet textile printing (describe later) was introduced into a second inkjet head. A post-treatment liquid (described later) was introduced into a third inkjet head (upstream in the feed direction). Using the flatbed printing jig, 10 g/m$^2$ of the treatment liquid for inkjet textile printing, 20 g/m$^2$ of the ink for inkjet textile printing, and 5 g/m$^2$ of the post-treatment liquid were ejected from the respective heads onto the polyester tropical fabric. The inkjet textile printing was performed with a distance of 3 mm between the fabric and the inkjet heads and an inkjet head temperature of 25. The printing substrate onto which the treatment liquid for inkjet textile printing, the ink for inkjet textile printing, and the post-treatment liquid were ejected was then heated at 160 °C for 3 minutes in an oven. This dried the treatment liquid for inkjet textile printing, the ink for inkjet textile printing, and the post-treatment liquid ejected onto the printing substrate, providing a printed textile.

Ink for Inkjet Textile Printing

The ink was prepared by mixing 4 parts by mass (solid content) of an anionic pigment dispersion having a pigment concentration of 20 mass% (AE-2078F, C.I. Pigment Black manufactured by Sanyo Color Works, Ltd.), 8 parts by mass (solid content) of a urethane dispersion having a solid content of 38 mass% (Superflex 470 manufactured by DSK Co., Ltd.), 1 part by mass of a nonionic surfactant (ethylene oxide adduct of acetylene glycol, Surfynol 440 manufactured by Nissin Chemical Industry Co., Ltd.), 30 parts by mass of propylene glycol, and the remaining parts by mass of water, and filtering the mixture with a 5-μm filter. In other words, the formulation of the ink was 4 mass% of the pigment, 8 mass% of the binder resin particles, 1 mass% of the nonionic surfactant, 30 mass% of propylene glycol, and the remaining mass% of water.

Post-Treatment Liquid

The post-treatment liquid was prepared by mixing 10 parts by mass (solid content) of emulsion of silicone oil having a silicone oil content of 39 mass% (POLON-MF-51 manufactured by Shin-Etsu Chemical Co., Ltd.), 30 parts by mass of propylene glycol, and the remaining parts by mass of water, and filtering the mixture with a 5-μm filter. In other words, the formulation of the post-treatment liquid was 10 mass% of emulsion of the silicone oil, 30 mass% of propylene glycol, and the remaining mass% of water.

Color Development

An L value of the image formed on each of the obtained printed textiles (an L value when the color tone of the image is represented in the Lab color space) was measured with a spectrophotometer (FD-5 manufactured by Konica Minolta, Inc.). When the obtained L value was less than 26.5, the color development was determined as being improved and evaluated as "good (B)." When the obtained L value was greater than or equal to 26.5 with the color development achieving a predetermined degree but being lower than the color development evaluated as "good (B)," the color development was evaluated as "fair (C)." Texture

Fabric as an unused printing substrate was first folded in two along warp threads (in a longitudinal direction of the fabric), and the distance between the lower portion of the fabric and the upper portion of the fabric at the fold (a loop height) was measured. The measured loop height of the unused printing substrate was defined as the loop height before textile printing.

A portion of the printed textile on which the image was formed was then folded in two along the warp threads (in the longitudinal direction of the fabric), and the loop height was measured. The measured loop height of the printed textile was defined as the loop height after textile printing.

The ratio of the obtained loop height after textile printing to the obtained loop height before textile printing was calculated using the formula below. This ratio was defined as a rate of change of the loop height.

Rate of change of loop height (%) = loop height after textile printing/loop height before textile printing $\times$ 100

A lower rate of change of the loop height indicates less deterioration in the texture resulting from textile printing. More specifically, a lower rate of change of the loop height indicates that the printed textile folded in two after textile printing has a smaller vertical height (a smaller distance between a lower portion of the fabric and an upper portion of the fabric). Thus, the printing substrate is less likely to harden when printed. This indicates that the hand of the printed textile is less likely to deteriorate.

Thus, when the obtained rate of change of the loop height was less than 130%, the texture was determined as being improved and evaluated as "good (B)." When the obtained rate of change of the loop height was greater than or equal to 130% with the texture being improved by a predetermined degree but by a degree less than the texture evaluated as "good (B)," the texture was evaluated as "fair (C)."

Odor: Aqueous Solution

Sensory Test

Aqueous solutions with the same organic acid ammonium salt concentration and the same magnesium acetate concentration as the treatment liquids for inkjet textile printing in the examples (working examples 1 to 5 and comparative examples 1 to 5) were prepared. When each of the aqueous solutions had an odor perceived by fewer than two testers among five testers, the obtained corresponding treatment liquid for inkjet textile printing was determined as being sufficiently less odorous and evaluated as "odorless." When the aqueous solution had an odor perceived by two or more testers among the five testers, the obtained corresponding treatment liquid for inkjet textile printing was determined as being not sufficiently less odorous and evaluated as "odorous."

Odor Concentration

The odor concentration of each of the aqueous solutions evaluated as "odorous" in the sensory test was obtained by converting, using a calibration curve determined by an olfactroy measurement operator, a sensor value obtained by measurement with an odor sensor (manufactured by Karumoa Co., Ltd.).

Evaluation

When the result of the sensory test was "odorless" or the odor concentration was less than 100, the obtained treatment liquid for inkjet textile printing was determined as being sufficiently less odorous and evaluated as "good (B)." When the odor concentration was greater than or equal to 100 with the treatment liquid for inkjet textile printing being less odorous by a predetermined degree but more odorous than the treatment liquid evaluated as "good (B)," the treatment liquid for inkjet textile printing was evaluated as "fair (C)."

Odor: During Textile Printing

Sensory Test

Determination was performed, by five testers, on an odor perceived when the printed textiles were obtained (in other words, during textile printing) as described above using the treatment liquids for inkjet textile printing in working examples 1 to 5 and comparative example 1, which were evaluated as "odorous" in the sensory test for the odor of the aqueous solutions. More specifically, the testers at positions 1 m away (1 m frontward) from the flatbed printing jig measured, based on a 6-point odor intensity scale, odor intensity in the atmosphere when textile printing was continuously performed for three minutes, and calculated an arithmetic mean of the obtained odor intensity.

Odor Concentration

Measurement was performed at the same positions as the testers who performed the sensory test, with the suction ports of odor sensors (manufactured by Karumoa Co., Ltd.) directed to the flatbed printing jig, to obtain sensor values. Among the obtained sensor values, a maximum value when textile printing was continuously performed for three minutes was converted, using the calibration curve determined by the olfactroy measurement operator, to obtain an odor concentration.

Evaluation

When the determination was "odorless" in the sensory test for the odor of the aqueous solution or the odor concentration was less than 2000, the treatment liquid for inkjet textile printing was determined as being sufficiently less odorous during textile printing, and evaluated as "good (B)." When the odor concentration was greater than or equal to 2000 with the treatment liquid for inkjet textile printing being less odorous by a predetermined degree during textile printing but more odorous than the treatment liquid evaluated as "good (B)," the treatment liquid for inkjet textile printing was evaluated as "fair (C)."

Fastness to Washing

The printed textiles were processed with a washing test machine based on Method A-1 in JIS L 0844: 2005 (Test Methods for Color Fastness to Washing and Laundering). The printed textiles were then rinsed, dehydrated, and dried, and the degrees of discoloration and color fading of the printed textiles were evaluated based on "Determination References for Discoloration and Color Fading." A level closer to level 5 indicates higher fastness to washing. When the fastness to washing was at level 4-5 or higher, the treatment liquid for inkjet textile printing was evaluated as "very good (A)." When the fastness to washing was at a level lower than level 4-5, the treatment liquid for inkjet textile printing was evaluated as "good (B)."

Table 1 shows the type and the content of the organic acid ammonium salt, the content of the magnesium acetate, and the pH in working examples 1 to 5 and comparative examples 1 to 5. Table 2 shows the results.

Table 1

| | Organic acid ammonium salt | | | Content of magnesium acetate (mass%) | pH |
|---|---|---|---|---|---|
| | Type of salt | Content | | | |
| | | mass% | mol/L | | |
| Working example 1 | Ammonium formate | 8.2 | 1.30 | 0.5 | 7.21 |
| Working example 2 | | 4.0 | 0.63 | | 7.15 |
| Working example 3 | | 10 | 1.59 | | 7.22 |
| Working example 4 | | 20 | 3.17 | | 7.25 |
| Working example 5 | | 8.2 | 1.30 | - | 7.20 |

(continued)

| | Organic acid ammonium salt | | | Content of magnesium acetate (mass%) | pH |
|---|---|---|---|---|---|
| | Type of salt | Content | | | |
| | | mass% | mol/L | | |
| Comparative example 1 | Ammonium acetate | 10 | 1.30 | 0.5 | 7.05 |
| Comparative example 2 | *Ammonium* lactate | 14 | 1.31 | | 7.30 |
| Comparative example 3 | Ammonium benzoate | 18 | 1.29 | | 7.01 |
| Comparative example 4 | Ammonium succinate | 15 | 0.99 | | 7.23 |
| Comparative example 5 | Triammonium citrate | 9.0 | 0.37 | | 7.11 |

Table 2

| | Color development | | Texture | | Odor | | | | | | Fastness to washing (Discoloration and color fading) | |
|---|---|---|---|---|---|---|---|---|---|---|---|---|
| | | | | | Aqueous solution | | | During textile printing | | | | |
| | L value | Evaluation | Rate of change of loop height (%) | Evaluation | Sensory test | Odor concentration | Evaluation | Sensory test | Odor concentration | Evaluation | Level | Evaluation |
| Working example 1 | 25.9 | B | 120 | B | Odorous | 48 | B | 0.8 | 1050 | B | Level 4-5 | A |
| Working example 2 | 26.2 | B | 125 | B | Odorous | 45 | B | 0.7 | 880 | B | Level 4-5 | A |
| Working example 3 | 25.8 | B | 119 | B | Odorous | 50 | B | 0.8 | 1175 | B | Level 4-5 | A |
| Working example 4 | 25.2 | B | 115 | B | Odorous | 70 | B | 1.4 | 1480 | B | Level 4-5 | A |
| Working example 5 | 26.0 | B | 120 | B | Odorous | 46 | B | 0.8 | 1050 | B | Level 4 | B |
| Comparative example 1 | 26.2 | B | 121 | B | Odorous | 398 | C | 2.4 | 2800 | C | Level 4-5 | A |
| Comparative example 2 | 26.9 | C | 111 | B | Odorless | - | B | - | - | B | Level 4-5 | A |
| Comparative example 3 | 26.3 | B | 147 | C | Odorless | - | B | - | - | B | Level 4-5 | A |
| Comparative example 4 | 26.8 | C | 136 | C | Odorless | - | B | - | - | B | Level 4-5 | A |
| Comparative example 5 | 30.3 | C | 142 | C | Odorless | - | B | - | - | B | Level 4-5 | A |

Tables 1 and 2 show that the treatment liquids for inkjet textile printing containing the water-soluble cationic polymer and ammonium formate (working examples 1 to 5) can reduce an odor as compared with the treatment liquid for inkjet textile printing containing ammonium acetate in place of ammonium formate (comparative example 1). The treatment liquids for inkjet textile printing containing ammonium formate (working examples 1 to 5) can provide a printed textile with high color development as compared with the treatment liquids for inkjet textile printing containing, in place of ammonium formate, ammonium lactate, ammonium succinate, or triammonium citrate, which may reduce an odor (comparative examples 2, 4, and 5). The treatment liquids for inkjet textile printing containing ammonium formate (working examples 1 to 5) can provide a printed textile with intended texture as compared with the treatment liquids for inkjet textile printing containing, in place of ammonium formate, ammonium benzoate, ammonium succinate, or triammonium citrate, which may reduce an odor (comparative examples 3 to 5). Thus, the treatment liquids for inkjet textile printing containing the water-soluble cationic polymer and ammonium formate (working examples 1 to 5) can provide a printed textile with high color development and improved texture while reducing an odor.

The effect of reducing an amine odor using a treatment liquid for inkjet textile printing containing the organic acid ammonium salt was then examined. Note that, in the examples below, the organic acid ammonium salt was ammonium succinate (organic acid: succinic acid having a vapor pressure of about 0 kPa at 20 °C), ammonium citrate (organic acid: citric acid having a vapor pressure of about 0 kPa at 20 °C), ammonium benzoate (organic acid: benzoic acid having a vapor pressure of 0.13 kPa at 20 °C), or ammonium acetate (organic acid: acetic acid having a vapor pressure of 1.5 kPa at 20 °C). Note that formic acid has a vapor pressure of 4.6 kPa at 20 °C.

Reference Example 1

A treatment liquid for inkjet textile printing (reference pretreatment liquid 1) in reference example 1 was obtained by mixing 3.0 parts by mass (solid content) of a copolymer of diallyldimethylammonium chloride and sulfur dioxide (PAS-A-5 manufactured by Nittobo Medical Co., Ltd., weight-average molecular weight, or Mw, of 4000), as a water-soluble cationic polymer, in which some of the chloride ions were ion-exchanged to succinate anions, 1.0 part by mass of ammonium succinate (manufactured by Yoneyama Chemical Industry Co., Ltd.), 0.5 parts by mass of magnesium acetate (manufactured by Yoneyama Chemical Industry Co., Ltd.) as a metal salt, 0.02 parts by mass of a nonionic surfactant (silicone surfactant, Silface SAG503A manufactured by Nissin Chemical Industry Co., Ltd.) as a surfactant, 40 parts by mass of 3-methyl-1,5-pentanediol (MPD manufactured by Kuraray Co., Ltd.) as an organic solvent, 1.0 part by mass of a 1 mol/L sodium hydroxide solution (manufactured by FUJIFILM Wako Pure Chemical Corporation) as a pH adjuster, and the remaining parts by mass (54.48 parts by mass) of water, and filtering the mixture with a 5-μm filter. The formulation of reference pretreatment liquid 1 was 3.0 mass% of the water-soluble cationic polymer and 1.0 mass% of the ammonium succinate. The obtained reference pretreatment liquid 1 was measured with the pH meter (D-71 manufactured by Horiba, Ltd.), and the result was 7.06.

Reference Example 2

A treatment liquid for inkjet textile printing (reference pretreatment liquid 2) in reference example 2 was obtained by mixing 3.0 parts by mass (solid content) of a copolymer of diallyldimethylammonium chloride and sulfur dioxide (PAS-A-5 manufactured by Nittobo Medical Co., Ltd., weight-average molecular weight, or Mw, of 4000), as a water-soluble cationic polymer, in which some of the chloride ions were ion-exchanged to succinate anions, 3.0 parts by mass of ammonium succinate (manufactured by Yoneyama Chemical Industry Co., Ltd.), 0.5 parts by mass of magnesium acetate (manufactured by Yoneyama Chemical Industry Co., Ltd.) as a metal salt, 0.02 parts by mass of a nonionic surfactant (silicone surfactant, Silface SAG503A manufactured by Nissin Chemical Industry Co., Ltd.) as a surfactant, 38 parts by mass of 3-methyl-1,5-pentanediol (MPD manufactured by Kuraray Co., Ltd.) as an organic solvent, and the remaining parts by mass (55.48 parts by mass) of water, and filtering the mixture with a 5-μm filter. The formulation of reference pretreatment liquid 2 was 3.0 mass% of the water-soluble cationic polymer and 3.0 mass% of the ammonium succinate. The obtained reference pretreatment liquid 2 was measured with the pH meter (D-71 manufactured by Horiba, Ltd.), and the result was 7.15.

Reference Example 3

A treatment liquid for inkjet textile printing (reference pretreatment liquid 3) in reference example 3 was obtained by mixing 10.0 parts by mass (solid content) of a copolymer of diallyldimethylammonium chloride and sulfur dioxide (PAS-A-5 manufactured by Nittobo Medical Co., Ltd., weight-average molecular weight, or Mw, of 4000), as a water-soluble cationic polymer, in which some of the chloride ions were ion-exchanged to succinate anions, 10.0 parts by mass of ammonium succinate (manufactured by Yoneyama Chemical Industry Co., Ltd.), 0.5 parts by mass of magnesium acetate (manufactured by Yoneyama Chemical Industry Co., Ltd.) as a metal salt, 0.02 parts by mass of a nonionic surfactant

(silicone surfactant, Silface SAG503A manufactured by Nissin Chemical Industry Co., Ltd.) as a surfactant, 25 parts by mass of 3-methyl-1,5-pentanediol (MPD manufactured by Kuraray Co., Ltd.) as an organic solvent, 3.0 parts by mass of a 1 mol/L sodium hydroxide solution (manufactured by FUJIFILM Wako Pure Chemical Corporation) as a pH adjuster, and the remaining parts by mass (51.48 parts by mass) of water, and filtering the mixture with a 5-μm filter. The formulation of reference pretreatment liquid 3 was 10.0 mass% of the water-soluble cationic polymer and 10.0 mass% of the ammonium succinate. The obtained reference pretreatment liquid 3 was measured with the pH meter (D-71 manufactured by Horiba, Ltd.), and the result was 7.25.

Reference Example 4

A treatment liquid for inkjet textile printing (reference pretreatment liquid 4) in reference example 4 was obtained by mixing 3.0 parts by mass (solid content) of a copolymer of diallyldimethylammonium chloride and sulfur dioxide (PAS-A-5 manufactured by Nittobo Medical Co., Ltd., weight-average molecular weight, or Mw, of 4000), as a water-soluble cationic polymer, in which some of the chloride ions were ion-exchanged to succinate anions, 3.0 parts by mass of ammonium citrate (manufactured by FUJIFILM Wako Pure Chemical Corporation), 0.5 parts by mass of magnesium acetate (manufactured by Yoneyama Chemical Industry Co., Ltd.) as a metal salt, 0.02 parts by mass of a nonionic surfactant (silicone surfactant, Silface SAG503A manufactured by Nissin Chemical Industry Co., Ltd.) as a surfactant, 38 parts by mass of 3-methyl-1,5-pentanediol (MPD manufactured by Kuraray Co., Ltd.) as an organic solvent, and the remaining parts by mass (55.48 parts by mass) of water, and filtering the mixture with a 5-μm filter. The formulation of reference pretreatment liquid 4 was 3.0 mass% of the water-soluble cationic polymer and 3.0 mass% of the ammonium citrate. The obtained reference pretreatment liquid 4 was measured with the pH meter (D-71 manufactured by Horiba, Ltd.), and the result was 7.28.

Reference Example 5

A treatment liquid for inkjet textile printing (reference pretreatment liquid 5) in reference example 5 was obtained by mixing 3.0 parts by mass (solid content) of a copolymer of diallyldimethylammonium chloride and sulfur dioxide (PAS-A-5 manufactured by Nittobo Medical Co., Ltd., weight-average molecular weight, or Mw, of 4000), as a water-soluble cationic polymer, in which some of the chloride ions were ion-exchanged to succinate anions, 10.0 parts by mass of ammonium citrate (manufactured by FUJIFILM Wako Pure Chemical Corporation), 0.5 parts by mass of magnesium acetate (manufactured by Yoneyama Chemical Industry Co., Ltd.) as a metal salt, 0.02 parts by mass of a nonionic surfactant (silicone surfactant, Silface SAG503A manufactured by Nissin Chemical Industry Co., Ltd.) as a surfactant, 26 parts by mass of 3-methyl-1,5-pentanediol (MPD manufactured by Kuraray Co., Ltd.) as an organic solvent, and the remaining parts by mass (56.48 parts by mass) of water, and filtering the mixture with a 5-μm filter. The formulation of reference pretreatment liquid 5 was 3.0 mass% of the water-soluble cationic polymer and 10.0 mass% of the ammonium citrate. The obtained reference pretreatment liquid 5 was measured with the pH meter (D-71 manufactured by Horiba, Ltd.), and the result was 7.33.

Reference Example 6

A treatment liquid for inkjet textile printing (reference pretreatment liquid 6) in reference example 6 was obtained by mixing 3.0 parts by mass (solid content) of a copolymer of diallyldimethylammonium chloride and sulfur dioxide (PAS-A-5 manufactured by Nittobo Medical Co., Ltd., weight-average molecular weight, or Mw, of 4000), as a water-soluble cationic polymer, in which some of the chloride ions were ion-exchanged to succinate anions, 3.0 parts by mass of ammonium benzoate (manufactured by FUJIFILM Wako Pure Chemical Corporation), 0.5 parts by mass of magnesium acetate (manufactured by Yoneyama Chemical Industry Co., Ltd.) as a metal salt, 0.02 parts by mass of a nonionic surfactant (silicone surfactant, Silface SAG503A manufactured by Nissin Chemical Industry Co., Ltd.) as a surfactant, 38 parts by mass of 3-methyl-1,5-pentanediol (MPD manufactured by Kuraray Co., Ltd.) as an organic solvent, and the remaining parts by mass (55.48 parts by mass) of water, and filtering the mixture with a 5-μm filter. The formulation of reference pretreatment liquid 6 was 3.0 mass% of the water-soluble cationic polymer and 3.0 mass% of the ammonium benzoate. The obtained reference pretreatment liquid 6 was measured with the pH meter (D-71 manufactured by Horiba, Ltd.), and the result was 7.03.

Reference Example 7

A treatment liquid for inkjet textile printing (reference pretreatment liquid 7) in reference example 7 was obtained by mixing 3.0 parts by mass (solid content) of a copolymer of diallyldimethylammonium chloride and sulfur dioxide (PAS-A-5 manufactured by Nittobo Medical Co., Ltd., weight-average molecular weight, or Mw, of 4000), as a water-soluble

cationic polymer, in which some of the chloride ions were ion-exchanged to succinate anions, 10.0 parts by mass of ammonium acetate (manufactured by Yoneyama Chemical Industry Co., Ltd.), 0.5 parts by mass of magnesium acetate (manufactured by Yoneyama Chemical Industry Co., Ltd.) as a metal salt, 0.02 parts by mass of a nonionic surfactant (silicone surfactant, Silface SAG503A manufactured by Nissin Chemical Industry Co., Ltd.) as a surfactant, 30 parts by mass of 3-methyl-1,5-pentanediol (MPD manufactured by Kuraray Co., Ltd.) as an organic solvent, and the remaining parts by mass (56.48 parts by mass) of water, and filtering the mixture with a 5-μm filter. The formulation of reference pretreatment liquid 7 was 3.0 mass% of the water-soluble cationic polymer and 10.0 mass% of the ammonium acetate. The obtained reference pretreatment liquid 7 was measured with the pH meter (D-71 manufactured by Horiba, Ltd.), and the result was 7.10.

Comparative Reference Example 1

A treatment liquid for inkjet textile printing (comparative reference pretreatment liquid 1) in comparative reference example 1 was obtained by mixing 10.0 parts by mass (solid content) of a copolymer of diallyldimethylammonium chloride and sulfur dioxide (PAS-A-5 manufactured by Nittobo Medical Co., Ltd., weight-average molecular weight, or Mw, of 4000), as a water-soluble cationic polymer, in which some of the chloride ions were ion-exchanged to succinate anions, 0.5 parts by mass of magnesium acetate (manufactured by Yoneyama Chemical Industry Co., Ltd.) as a metal salt, 0.02 parts by mass of a nonionic surfactant (silicone surfactant, Silface SAG503A manufactured by Nissin Chemical Industry Co., Ltd.) as a surfactant, 31 parts by mass of 3-methyl-1,5-pentanediol (MPD manufactured by Kuraray Co., Ltd.) as an organic solvent, 3.0 parts by mass of a 1 mol/L sodium hydroxide solution (manufactured by FUJIFILM Wako Pure Chemical Corporation) as a pH adjuster, and the remaining parts by mass (55.48 parts by mass) of water, and filtering the mixture with a 5-μm filter. The formulation of comparative reference pretreatment liquid 1 was 10.0 mass% of the water-soluble cationic polymer. The obtained comparative reference pretreatment liquid 1 was measured with the pH meter (D-71 manufactured by Horiba, Ltd.), and the result was 7.04.

Comparative Reference Example 2

A treatment liquid for inkjet textile printing (comparative reference pretreatment liquid 2) in comparative reference example 2 was obtained by mixing 3.0 parts by mass (solid content) of a copolymer of diallyldimethylammonium chloride and sulfur dioxide (PAS-A-5 manufactured by Nittobo Medical Co., Ltd., weight-average molecular weight, or Mw, of 4000), as a water-soluble cationic polymer, in which some of the chloride ions were ion-exchanged to succinate anions, 10 parts by mass of ammonium formate (manufactured by Yoneyama Chemical Industry Co., Ltd.), 0.5 parts by mass of magnesium acetate (manufactured by Yoneyama Chemical Industry Co., Ltd.) as a metal salt, 0.02 parts by mass of a nonionic surfactant (silicone surfactant, Silface SAG503A manufactured by Nissin Chemical Industry Co., Ltd.) as a surfactant, 35 parts by mass of 3-methyl-1,5-pentanediol (MPD manufactured by Kuraray Co., Ltd.) as an organic solvent, 1.0 part by mass of a 1 mol/L sodium hydroxide solution (manufactured by FUJIFILM Wako Pure Chemical Corporation) as a pH adjuster, and the remaining parts by mass (50.48 parts by mass) of water, and filtering the mixture with a 5-μm filter. The formulation of comparative reference pretreatment liquid 2 was 3.0 mass% of the water-soluble cationic polymer and 10.0 mass% of the ammonium formate. The obtained comparative reference pretreatment liquid 2 was measured with the pH meter (D-71 manufactured by Horiba, Ltd.), and the result was 7.21. Comparative Reference Example 3

A treatment liquid for inkjet textile printing (comparative reference pretreatment liquid 3) in comparative reference example 3 was obtained by mixing 3.0 parts by mass (solid content) of a copolymer of diallyldimethylammonium chloride and sulfur dioxide (PAS-A-5 manufactured by Nittobo Medical Co., Ltd., weight-average molecular weight, or Mw, of 4000), as a water-soluble cationic polymer, in which some of the chloride ions were ion-exchanged to succinate anions, 3 parts by mass of succinic acid (manufactured by Nippon Shokubai Co., Ltd.), 0.5 parts by mass of magnesium acetate (manufactured by Yoneyama Chemical Industry Co., Ltd.) as a metal salt, 0.02 parts by mass of a nonionic surfactant (silicone surfactant, Silface SAG503A manufactured by Nissin Chemical Industry Co., Ltd.) as a surfactant, 40 parts by mass of 3-methyl-1,5-pentanediol (MPD manufactured by Kuraray Co., Ltd.) as an organic solvent, and the remaining parts by mass (53.48 parts by mass) of water, and filtering the mixture with a 5-μm filter. The formulation of reference pretreatment liquid 3 was 3.0 mass% of the water-soluble cationic polymer and 3.0 mass% of the succinic acid. The obtained comparative reference pretreatment liquid 2 was measured with the pH meter (D-71 manufactured by Horiba, Ltd.), and the result was 4.20.

Printed textiles were obtained in the same manner as or a similar manner to the printed textile in working example 1 except that the treatment liquids for inkjet textile printing prepared as described above were used.

Odor: Printed Textile

The obtained printed textiles were each dried at high temperature (dried at 160 °C for three hours), and then

packed into a bag. When an amine odor was not perceived from the printed textile dried at high temperature in the bag, the printed textile was determined as being sufficiently less odorous and evaluated as "good (B)." When an amine odor was perceived from the printed textile with a degree less than a predetermined degree but not less than the degree of the amine odor perceived from the printed textile evaluated as "good (B)," the printed textile was evaluated as "fair (C)."

Material Compatibility

First, the masses of O-rings (manufactured by Viton) used to evaluate material compatibility were measured. The obtained masses were each defined as a mass WO. The O-rings, the masses of which were measured, were immersed in the obtained treatment liquids for inkjet textile printing and left at 60 °C for three months. The masses of the O-rings after being left were measured. The obtained masses were each defined as a mass W. Mass change rates R were measured based on the obtained masses WO and W. More specifically, each of the mass change rates R was calculated by a formula $R = (W - WO)/WO \times 100$ (%). When the mass change rate R was less than or equal to 5%, the material compatibility was determined as being high and evaluated as "good (B)." When the mass change rate R was greater than 5% with the material compatibility as high as a predetermined degree but not higher than the material compatibility evaluated as "good (B)," the material compatibility was evaluated as "fair (C)."

Table 3 shows the content of the water-soluble cationic polymer, ammonium succinate, the pH, and the evaluation results (odor and material compatibility) in reference examples 1 to 7 and comparative reference examples 1 to 3.

| | Content of water-soluble cationic polymer (mass%) | Organic acid ammonium salt | | Content of organic acid ammonium salt (Relative to water-soluble cationic polymer) (mass%) | pH | Odor (Amine odor) | Material compatibility | |
|---|---|---|---|---|---|---|---|---|
| | | Type | Content (mass%) | | | | Mass change rate (%) | Evaluation |
| Reference example 1 | 3 | Ammonium succinate | 1 | 33 | 7.06 | B | 1.0 | B |
| Reference example 2 | 3 | | 3 | 100 | 7.15 | B | 1.2 | 13 |
| Reference example 3 | 10 | | 10 | 100 | 7.25 | B | 1.1 | B |
| Reference example 4 | 3 | Ammonium citrate | 3 | 100 | 7.28 | B | 0.8 | B |
| Reference example 5 | 3 | | 10 | 333 | 7.33 | B | 1.1 | B |
| Reference example 6 | 3 | Ammonium benzoate | 3 | 100 | 7.03 | B | 0.4 | B |
| Reference example 7 | 3 | Ammonium acetate | 10 | 333 | 7.10 | B | 1.0 | B |
| Comparative reference example 1 | 10 | - | | | 7.04 | C | 1.4 | B |
| Comparative reference example 2 | 3 | Ammonium formate | 10 | 333 | 7.21 | C | 0.6 | B |
| Comparative reference example 3 | 3 | Succinic acid | 3 | - | 4.20 | B | 19.8 | C |

Table 3 shows that the treatment liquids for inkjet textile printing containing the organic acid ammonium salts (working examples 1 to 7) can reduce an amine odor, as compared with the treatment liquid for inkjet textile printing not containing the organic acid ammonium salts (comparative reference example 1) and the treatment liquid for inkjet textile printing containing ammonium formate in place of the organic acid ammonium salts (comparative reference example 2). This indicates that the treatment liquids for inkjet textile printing containing the organic acid ammonium salts can reduce an amine odor. The treatment liquid for inkjet textile printing containing succinic acid in place of the organic acid ammonium salts (comparative reference example 3) has lower material compatibility. In contrast, the treatment liquids for inkjet textile printing containing the organic acid ammonium salts (reference examples 1 to 7) to reduce an amine odor can achieve high material compatibility in addition to reducing an amine odor. More specifically, the material compatibility in reference examples 1 to 7 is higher than the material compatibility in comparative reference example 3. Thus, the treatment liquids for inkjet textile printing containing the organic acid ammonium salts in addition to ammonium formate can provide a printed textile with high material compatibility, higher color development, and more improved texture while reducing an odor, in particular, an odor from an organic acid salt, as well as an odor (e.g., an amine odor) from the water-soluble cationic polymer. To clarify this, treatment liquids for inkjet textile printing containing ammonium formate and the organic acid ammonium salts were examined.

Working Example 6

A treatment liquid for inkjet textile printing (pretreatment liquid 6) in working example 6 was obtained by mixing 3.0 parts by mass (solid content) of a copolymer of diallyldimethylammonium chloride and sulfur dioxide (PAS-A-5 manufactured by Nittobo Medical Co., Ltd., weight-average molecular weight, or Mw, of 4000), as a water-soluble cationic polymer, in which some of the chloride ions were ion-exchanged to succinate anions, 10 parts by mass of ammonium formate (manufactured by Yoneyama Chemical Industry Co., Ltd.), 3.0 parts by mass of ammonium succinate (manufactured by Yoneyama Chemical Industry Co., Ltd.), 0.5 parts by mass of magnesium acetate (manufactured by Yoneyama Chemical Industry Co., Ltd.) as a metal salt, 0.02 parts by mass of a nonionic surfactant (silicone surfactant, Silface SAG503A manufactured by Nissin Chemical Industry Co., Ltd.) as a surfactant, 30 parts by mass of 3-methyl-1,5-pentanediol (MPD manufactured by Kuraray Co., Ltd.) as an organic solvent, and the remaining parts by mass (53.48 parts by mass) of water, and filtering the mixture with a 5-μm filter. The formulation of pretreatment liquid 6 was 3.0 mass% of the water-soluble cationic polymer, 10.0 mass% of the ammonium formate, and 3.0 mass% of the ammonium succinate. The obtained pretreatment liquid 6 was measured with the pH meter (D-71 manufactured by Horiba, Ltd.), and the result was 7.14.

Working Example 7

A treatment liquid for inkjet textile printing (pretreatment liquid 7) in working example 7 was obtained by mixing 3.0 parts by mass (solid content) of a copolymer of diallyldimethylammonium chloride and sulfur dioxide (PAS-A-5 manufactured by Nittobo Medical Co., Ltd., weight-average molecular weight, or Mw, of 4000), as a water-soluble cationic polymer, in which some of the chloride ions were ion-exchanged to succinate anions, 10 parts by mass of ammonium formate (manufactured by Yoneyama Chemical Industry Co., Ltd.), 3.0 parts by mass of ammonium citrate (manufactured by Yoneyama Chemical Industry Co., Ltd.), 0.5 parts by mass of magnesium acetate (manufactured by Yoneyama Chemical Industry Co., Ltd.) as a metal salt, 0.02 parts by mass of a nonionic surfactant (silicone surfactant, Silface SAG503A manufactured by Nissin Chemical Industry Co., Ltd.) as a surfactant, 30 parts by mass of 3-methyl-1,5-pentanediol (MPD manufactured by Kuraray Co., Ltd.) as an organic solvent, and the remaining parts by mass (53.48 parts by mass) of water, and filtering the mixture with a 5-μm filter. The formulation of pretreatment liquid 7 was 3.0 mass% of the water-soluble cationic polymer, 10.0 mass% of the ammonium formate, and 3.0 mass% of the ammonium citrate. The obtained pretreatment liquid 7 was measured with the pH meter (D-71 manufactured by Horiba, Ltd.), and the result was 7.30.

Working Example 8

A treatment liquid for inkjet textile printing (pretreatment liquid 8) in working example 8 was obtained by mixing 3.0 parts by mass (solid content) of a copolymer of diallyldimethylammonium chloride and sulfur dioxide (PAS-A-5 manufactured by Nittobo Medical Co., Ltd., weight-average molecular weight, or Mw, of 4000), as a water-soluble cationic polymer, in which some of the chloride ions were ion-exchanged to succinate anions, 10 parts by mass of ammonium formate (manufactured by Yoneyama Chemical Industry Co., Ltd.), 3.0 parts by mass of ammonium benzoate (manufactured by Yoneyama Chemical Industry Co., Ltd.), 0.5 parts by mass of magnesium acetate (manufactured by Yoneyama Chemical Industry Co., Ltd.) as a metal salt, 0.02 parts by mass of a nonionic surfactant (silicone surfactant, Silface SAG503A manufactured by Nissin Chemical Industry Co., Ltd.) as a surfactant, 30 parts by mass of 3-methyl-1,5-

pentanediol (MPD manufactured by Kuraray Co., Ltd.) as an organic solvent, and the remaining parts by mass (53.48 parts by mass) of water, and filtering the mixture with a 5-μm filter. The formulation of pretreatment liquid 8 was 3.0 mass% of the water-soluble cationic polymer, 10.0 mass% of the ammonium formate, and 3.0 mass% of the ammonium benzoate. The obtained pretreatment liquid 8 was measured with the pH meter (D-71 manufactured by Horiba, Ltd.), and the result was 7.01.

The treatment liquids for inkjet textile printing prepared as described above were evaluated (color development, texture, an odor of the aqueous solution, an odor during textile printing, an odor of the printed textile, fastness to washing, and material compatibility) in the same manner as or a similar manner to the above.

Table 4 shows the content of the water-soluble cationic polymer, the content of ammonium formate, the type and the content of the organic acid ammonium salt, and the pH in working examples 6 to 8. Table 5 shows the results of the evaluation.

Table 4

| | Content of water-soluble cationic polymer (mass%) | Content of ammonium formate (mass%) | Organic acid ammonium salt | | Content of organic acid ammonium salt (Relative to water-soluble cationic polymer) (mass%) | pH |
|---|---|---|---|---|---|---|
| | | | Type | Content (mass%) | | |
| Working example 6 | 3 | 10 | Ammonium succinate | 3 | 100 | 7.14 |
| Working example 7 | 3 | 10 | Ammonium citrate | 3 | 100 | 7.30 |
| Working example 8 | 3 | 10 | Ammonium benzoate | 3 | 100 | 7.01 |

Table 5

| | Color development | | Texture | | Odor | | | | | | | Fastness to washing (Discoloration and color fading) | | Material compatibility | |
|---|---|---|---|---|---|---|---|---|---|---|---|---|---|---|---|
| | | | | | Aqueous solution | | | During textile printing | | | Printed textile | | | | |
| | L value | Evaluation | Rate of change of loop height (%) | Evaluation | Sensory test | Odor concentration | Evaluation | Sensory test | Odor concentration | Evaluation | | Level | Evaluation | Mass change rate (%) | Evaluation |
| Working example 6 | 25.5 | B | 125 | B | Odorous | *50* | B | 0.8 | 1175 | B | B | Level 4-5 | A | 1.1 | B |
| Working example 7 | 25.8 | B | 125 | B | Odorous | 49 | B | 0.8 | 1140 | B | B | Level 4-5 | A | 1.0 | B |
| Working example 8 | 25.7 | B | 125 | B | Odorous | 51 | B | 0.8 | 1190 | B | B | Level 4-5 | A | 0.7 | B |

Tables 4 and 5 show that the treatment liquids for inkjet textile printing further containing the organic acid ammonium salts in addition to the water-soluble cationic polymer and ammonium formate (working examples 6 to 8) achieve high material compatibility in addition to producing the effects in working examples 1 to 5, and can also reduce an amine odor. Thus, the treatment liquids for inkjet textile printing further containing the organic acid ammonium salts in addition to ammonium formate can provide a printed textile with high material compatibility, higher color development, and more improved texture, while reducing an odor, in particular, an odor from an organic acid salt, as well as an odor from the water-soluble cationic polymer.

This application is based on Japanese Patent Application No. 2023-218002 filed on December 25, 2023, the contents of which are incorporated herein by reference.

To describe the present invention, the present invention has been appropriately and sufficiently described through embodiments as above. However, those skilled in the art can easily at least change or improve the above embodiments. Therefore, unless such changes or improvements made by those skilled in the art depart from the scope of the claims, such changes or improvements are construed as being included within the scope of the claims.

## INDUSTRIAL APPLICABILITY

In one or more embodiments of the present invention, the treatment liquid for inkjet textile printing, the ink set for inkjet textile printing, the inkjet textile printing method, and the inkjet textile printing apparatus can provide a printed textile with high color development and improved texture while reducing an odor.

## REFERENCE SIGNS

| | |
|---|---|
| 3 | support |
| 4 | ink head |
| 4a | first ink head |
| 4b | second ink head |
| 4c | third ink head |
| 4d | fourth ink head |
| 5 | pretreatment liquid head |
| 6 | post-treatment liquid head |
| 10 | inkjet textile printing apparatus |
| 11 | apparatus frame |
| 12 | printing area |
| 13 | maintenance area |
| 14 | turn-back area |
| 15 | carriage guide |
| 16 | timing belt |
| 17 | guide rail |
| 20 | workpiece feeder |
| 21 | feed roller |
| 22 | take-up roller |
| 23 | first tension roller |
| 24 | workpiece guide |
| 25 | transport roller |
| 26 | pinch roller |
| 27 | turn roller |
| 28 | second tension roller |
| 29 | platen |
| 30 | carriage frame |
| 31 | head support frame |
| 32 | back frame |
| 41A to 48A | first to eighth upstream ink heads |
| 41B to 48B | first to eighth downstream ink heads |
| 7FA | pretreatment supply subtank |
| 7FB | pretreatment collection subtank |
| 7RA | post-treatment supply subtank |

| | |
|---|---|
| 7RB | post-treatment collection subtank |
| 71A to 78A | first to eighth supply subtanks |
| 71B to 78B | first to eighth collection subtanks |
| 90 | main tank |
| 100 | inkjet printer |
| 111 | center frame |
| 112 | right frame |
| 113 | left frame |
| 300 | carriage |
| F | feed direction |
| M1 | first motor |
| M2 | second motor |
| P | printing substrate |
| S | main scanning direction |
| W | workpiece |
| WA | feed roll |
| WB | take-up roll |

## Claims

1. A treatment liquid for inkjet textile printing, the treatment liquid comprising:

    a water-soluble cationic polymer; and
    ammonium formate.

2. The treatment liquid according to claim 1, wherein
a content of the ammonium formate relative to the treatment liquid is 0.1 to 25 mass% inclusive.

3. The treatment liquid according to claim 1 or claim 2, wherein
the water-soluble cationic polymer contains a succinate anion.

4. The treatment liquid according to any one of claims 1 to 3, wherein
a content of the water-soluble cationic polymer relative to the treatment liquid is 0.3 to 35 mass% inclusive.

5. The treatment liquid according to any one of claims 1 to 4, wherein
the treatment liquid has a pH of 7 to 9.5 inclusive.

6. The treatment liquid according to any one of claims 1 to 5, further comprising:
a metal salt.

7. The treatment liquid according to any one of claims 1 to 6, wherein
the treatment liquid is a pretreatment liquid.

8. The treatment liquid according to any one of claims 1 to 7, further comprising:
an organic acid ammonium salt consisting of an organic acid having a vapor pressure less than or equal to 2 kPa at 20 °C and ammonia.

9. The treatment liquid according to claim 8, wherein
a content of the organic acid ammonium salt relative to the water-soluble cationic polymer is 10 mass% or greater.

10. A treatment liquid for inkjet textile printing, the treatment liquid comprising:

    a water-soluble cationic polymer; and
    an organic acid ammonium salt consisting of an organic acid having a vapor pressure less than or equal to 2 kPa at 20 °C and ammonia.

11. An ink set for inkjet textile printing, the ink set comprising:

the treatment liquid according to any one of claims 1 to 10; and
ink for inkjet textile printing containing a pigment.

**12.** An inkjet textile printing method, comprising:

ejecting and depositing the treatment liquid according to any one of claims 1 to 10 onto fabric; and
ejecting and depositing ink for inkjet textile printing containing a pigment onto the fabric on which the treatment liquid is deposited.

**13.** An inkjet textile printing apparatus, comprising:

a treatment liquid head configured to eject and deposit the treatment liquid according to any one of claims 1 to 10 onto fabric; and
an ink head configured to eject and deposit ink for inkjet textile printing containing a pigment onto the fabric on which the treatment liquid is deposited.

FIG. 1

10
4
5
4a
4b
4c
4d
6
P
3

100
Rear
Up
Left
Right
Down
Front
14
III
11
13
15
12
17
16
7
300
F
4
6
W
112
113
20
111
III

FIG. 2

FIG. 3

Up
Rear
Front
Down
30
32
31
300
100
17
15
16
17
5
4
6
12
20
W
26
F
24
25
29
27
M2
23
28
21
22
WA
WB
M1

FIG. 4

7
71A 72A 73A 74A 75A 76A 77A 78A 7FA 7RA
71B 72B 73B 74B 75B 76B 77B 78B 7FB 7RB
300
32
30
17
15
16
17
5
4
42A 43A 44A 45A 46A 47A 48A
F
Rear
Up
Left
Right
Down
Front
41B 42B 31 31H 44B 45B 46B 47B 48B 6
41A 43B
S

## INTERNATIONAL SEARCH REPORT

International application No. **PCT/JP2024/045083**

**A. CLASSIFICATION OF SUBJECT MATTER**

***D06P 5/30***(2006.01)i; ***B41J 2/01***(2006.01)i; ***B41M 5/00***(2006.01)i; ***C09D 11/38***(2014.01)i; ***D06B 11/00***(2006.01)i; ***D06C 23/00***(2006.01)i; ***D06P 5/00***(2006.01)i

FI: D06P5/30; D06P5/00 104; C09D11/38; B41M5/00 114; B41M5/00 132; D06B11/00 A; D06C23/00; B41J2/01 501; B41J2/01 123

According to International Patent Classification (IPC) or to both national classification and IPC

**B. FIELDS SEARCHED**

Minimum documentation searched (classification system followed by classification symbols)

D06P5/30; B41J2/01; B41M5/00; C09D11/38; D06B11/00; D06C23/00; D06P5/00

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2023/042761 A1 (KYOCERA CORPORATION) 23 March 2023 (2023-03-23) claims 1, 11, paragraphs [0045]-[0047], [0077]-[0111], tables 1-2, examples 1-10 | 10-13 |
| Y | paragraph [0045], examples | 1-13 |
| Y | JP 2015-74692 A (SEIKO EPSON CORPORATION) 20 April 2015 (2015-04-20) claims 1, 5, paragraphs [0025]-[0027], [0038]-[0039], [0045], [0047], [0077]-[0091], tables 1-2, examples 1-2 | 1-13 |
| Y | WO 2023/243493 A1 (KYOCERA CORPORATION) 21 December 2023 (2023-12-21) claim 1, paragraphs [0014], [0016]-[0017], [0021], [0041] | 1-13 |
| A | JP 2023-66349 A (SAKATA INX CORP.) 15 May 2023 (2023-05-15) entire text | 1-13 |
| A | JP 2012-40778 A (RICOH COMPANY, LTD.) 01 March 2012 (2012-03-01) entire text, all drawings | 1-13 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **27 February 2025** | **11 March 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

INTERNATIONAL SEARCH REPORT

International application No.
PCT/JP2024/045083

**C. DOCUMENTS CONSIDERED TO BE RELEVANT**

| Category* | Citation of document, with indication, where appropriate, of the relevant passages | Relevant to claim No. |
|---|---|---|
| P, A | JP 2024-108943 A (BROTHER KOGYO KABUSHIKI KAISHA) 13 August 2024 (2024-08-13) entire text, all drawings | 1-13 |

Form PCT/ISA/210 (second sheet) (July 2022)

**INTERNATIONAL SEARCH REPORT**
**Information on patent family members**

International application No.
**PCT/JP2024/045083**

| Patent document cited in search report | Publication date (day/month/year) | Patent family member(s) | Publication date (day/month/year) |
|---|---|---|---|
| WO 2023/042761 A1 | 23 March 2023 | US 2024/0263032 A1 claims 1, 11, paragraphs [0047]-[0049], [0079]-[0124], tables 1-2, examples 1-10 | |
| JP 2015-74692 A | 20 April 2015 | (Family: none) | |
| WO 2023/243493 A1 | 21 December 2023 | (Family: none) | |
| JP 2023-66349 A | 15 May 2023 | EP 4424786 A1 entire text | |
| JP 2012-40778 A | 01 March 2012 | US 2013/0143008 A1 entire text, all drawings | |
| JP 2024-108943 A | 13 August 2024 | US 2024/0254358 A1 entire text, all drawings | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020183605 A
- JP 2021152091 A
- JP 2023218002 A